# EUROPEAN PATENT SPECIFICATION

(11) **EP 1 149 475 B1**
(45) Date of publication and mention of the grant of the patent: **03.12.2003**
(21) Application number: 00910144.5
(22) Date of filing: 10.02.2000
(51) Int. Cl.: H03M 13/00, H04L 9/30

(54) **A FUZZY COMMITMENT SCHEME**
EIN FUZZY ENGAGEMENT SCHEMA
LOGIQUE DE VALIDATION FLOUE

(30) Priority: 11.02.1999 US 119674 P; 04.06.1999 US 137687 P
(43) Date of publication of application: 31.10.2001
(73) Proprietor: RSA Security Inc., Bedford, MA 01730 (US)
(72) Inventor: JUELS, Ari, Brookline, MA 02446 (US); WATTENBERG, Martin M., New York, NY 10011 (US)
(74) Representative: Hackett, Sean James
(86) International application number: US0003522
(87) International publication number: WO00051244

(56) References cited:
- WO-A-97/43736
- FRANKEL Y ET AL: "WITNESS-BASED CRYPTOGRAPHIC PROGRAM CHACKING AND APLLICATIONS" PROCEEDINGS OF THE ANNUAL SYMPOSIUM ON PRINCIPLES OF DISTRIBUTED COMPUTING (PODC),US,NEW YORK, ACM, vol. SYMP. 15, 1996, page 211 XP000681040 ISBN: 0-89791-800-2
- ALABBADI M ET AL: "INTEGRATED SECURITY AND ERROR CONTROL FOR COMMUNICATION NETWORKS USING THE MCELIECE CRYPTOSYSTEM" PROCEEDINGS OF THE INTERNATIONAL CARNAHAN CONFERENCE ON SECURITY TECHNOLOGY: CRIME COUNTERMEASURES,US,NEW YORK, IEEE, vol. -, 1992, pages 172-178, XP000357480
- RUBENSTEIN R H: "HARDWARE ACCELERATOR IS PUBLIC'S KEY TO CARD SECURITY" NEW ELECTRONICS,GB,INTERNATIONAL THOMSON PUBLISHING, LONDON, vol. 27, no. 4, 1 April 1994 (1994-04-01), pages 13,15-16, XP000447248 ISSN: 0047-9624
- XINMEI W: "DIGITAL SIGNATURE SCHEME BASED ON ERROR-CORRECTING CODES" ELECTRONICS LETTERS,GB,IEE STEVENAGE, vol. 26, no. 13, 21 June 1990 (1990-06-21), pages 898-899, XP000107957 ISSN: 0013-5194
- RIEK J R: "OBSERVATIONS ON THE APPLICATION OF ERROR CORRECTING CODES TO PUBLIC KEY ENCRYPTION" PROCEEDINGS OF THE MILITARY COMMUNICATIONS CONFERENCE. (MILCOM),US,NEW YORK, IEEE, vol. -, 1990, pages 1281-1284, XP000221703
- RAO T R N ET AL: "PRIVATE-KEY ALGEBRAIC-CODE ENCRYPTIONS" IEEE TRANSACTIONS ON INFORMATION THEORY,US,IEEE INC. NEW YORK, vol. 35, no. 4, 1 July 1989 (1989-07-01), pages 829-833, XP000100912 ISSN: 0018-9448

## Description

### Technical Field

The present invention relates to error-correcting codes and to cryptography. In particular, the present invention relates to a combination of cryptography and error-correcting codes to achieve a new cryptographic primitive.

### Background Information

Cryptographic protocols are conventionally predicated on exact knowledge. An authentication system using RSA signatures, for example, derives its security largely from the presumption that a legitimate user with public key (N, e) possesses a corresponding secret key of the uniquely specifiable form (N, d). There are situations, however, in which human and other factors undermine the possibility of exactness in a security system. For example, in biometric systems in which users identify themselves by means of fingerprint features, variability in user interaction is such that a finger is rarely read exactly the same way twice. Moreover, there are situations in which although the original information in a system is exact, its transmission may only be approximate. For example, users typically make typing errors when entering passwords on keyboards. Similarly, data transmission channels are often subject to random noise.

An element of some cryptographic protocols is referred to as a bit commitment scheme. In a conventional bit commitment scheme, one player, whom we denote the sender, aims to conceal a bit b. The sender produces an encryption of b, denoted by y, and sends y to a second player, known as the receiver. Generally, a bit commitment scheme is such that it is infeasible for the second player to learn the bit b. Additionally, the sender later "opens" the commitment y, that is, proves to the receiver that y indeed represents an encryption of b. It is generally only feasible, however, for the sender to "open" y in one way, that is, to decrypt a unique value of b. We may view this, intuitively, as a process whereby the sender places the bit b in a safe and gives the safe to the receiver. Only the sender can open the safe, since she alone knows the combination. Moreover, she cannot change the value contained in the safe while it is in the keeping of the receiver.

An example of a bit commitment scheme is the storage of the hash of user's password in a UNIX file accessible only to the UNIX system administrator. Since the system administrator only has access to the hash of the password, the system administrator does not know what the user's plaintext password is. Nonetheless, when the user provides a password for authentication, the system administrator can compare the hash of the provided password to the stored hash and, if the hashes match, confirm that the user has provided the proper password. Bit commitment may alternatively be done, for example, using a symmetric encryption algorithm, an asymmetric encryption algorithm, a pseudo-random sequence generator, or any other one-way function.

Formally, a bit commitment scheme consists of a function F: {0, 1} × X → Y. To commit a bit b, the sender chooses a witness x ∈ X, generally uniformly at random. The sender then computes y = F(b, x). This value y is known as a blob. It represents the bit b sealed in a "safe". To "open" or decommit the blob y, the sender produces the bit b and the witness x. The blob is successfully opened if the receiver has been convinced that y indeed represents an encryption of b. A bit commitment scheme is said to be concealing if it is infeasible for the receiver to guess b with probability significantly greater than 1/2. It is said to be binding if it is infeasible for the sender to decommit the blob y with the incorrect bit, that is, with (1 - b). It is possible to deploy a bit commitment scheme as a commitment scheme on an arbitrarily long string of bits by committing each bit independently. The term commitment scheme shall refer to a scheme that involves commitment of a bit string c (or other potentially non-binary value) in a single blob, and for which it is possible to extract c efficiently given a witness for the blob. Thus we assume F: C × X → Y, where C is some potentially non-binary space.

Vendors of biometric systems have for some time recognized the importance of achieving a practical system that stores biometric information in a non-explicit, protected form and that also can tolerate some corruption in subsequent biometric readings. To this end, the Mytec Technologies Inc. has developed an encryption process in which biometric information serves as an unlocking key. Sold under the brand name Bioscrypt™, Mytec Technologies's process overcomes the problem of corruption in biometric readings by means of Fourier transforms. While fairly efficient, however, the Bioscrypt™ process carries no rigorous security guarantees.

Davida, Frankel, and Matt have proposed a system in which a biometric template is stored in non-explicit, protected form. The Davida et al. system requires multiple biometric readings from which the check bits may be derived. A hash of the Davida et al. template which includes the check bits is then stored. The multiple biometric readings required by the Davida et al. system may be too time-consuming to be practical or attractive for many real-world applications. Further, the Davida system does not have the necessary error tolerance to work in many real-world applications.

### Summary Of The Invention

A simple cryptographic primitive, which is a type of commitment scheme that uses well-known algorithms, facilitates the use of approximate information in cryptographic systems. As a model for approximate reasoning in humans, researchers in artificial intelligence have elaborated a notion known as "fuzzy logic." By analogy, we call the primitive introduced in this application a fuzzy commitment scheme. The fuzzy commitment scheme allows for a stronger notion of binding than that previously employed in the literature. Using the fuzzy commitment scheme, it is not just infeasible to decommit two distinct values from a single commitment, but also, it is infeasible to decommit using two substantially different witnesses.

The fuzzy commitment scheme F is able to achieve a new commitment scheme property referred to as "fuzziness". By this, we mean that the commitment scheme is resilient to small corruptions in witness values. More precisely, a blob y can be opened using any witness x' that is close to x in some appropriate metric, such as Hamming distance, but not necessarily identical to x. At first glance, having this type of resilience seems contradictory to the goals that F be binding and concealing. After all, to achieve these two security aims, F must be an encryption function of sorts. It would therefore seem necessary, in accordance with conventional encryption or hash function design, for small changes in input values to yield large, unpredictable changes in output values. In other words, F should thoroughly and unpredictably "scramble" input bits. On the other hand, the goal of fuzziness in F suggests exactly the opposite, namely a high degree of local structure. Here, we reconcile these ostensibly conflicting goals using well-known components drawn from error-correcting codes and cryptography.

In general, in one aspect, the invention relates to a method for generating a fuzzy commitment from an input pattern. The method includes receiving an input pattern from a user and mapping the input pattern to a first codeword. The first codeword is selected at random from a plurality of codewords associated with an error-correcting code. The method also includes calculating an offset between the input pattern and the first codeword, and hashing the first codeword.

In one embodiment, the input pattern is a metric associated with a user such as a first measurement of a biometric or a first measurement of a pattern of behavior. In another embodiment, the offset is stored. In another embodiment, both the offset and the hash of the first codeword is stored.

In another embodiment, a key is generated using an encryption algorithm and the hash of the first codeword as the key generation seed. In one embodiment, the key is used to encrypt a message. In a related embodiment, the key is further used to decrypt the encrypted message. In another embodiment, the key is used to decrypt a message without having been previously used to encrypt the message. In another embodiment, the key is used to sign a message.

In another embodiment, a key pair is generated using an asymmetric encryption algorithm and the hash of the first codeword as the key generation seed. The key pair includes a public key and a private key. In a related embodiment, the public key is transmitted to an authentication entity.

In general, in another aspect, the invention also relates to a method for generating a fuzzy commitment from an input pattern. The method includes receiving an input pattern from a user and deriving a first codeword from the input pattern. The first codeword is derived by applying a decoding function of an error-correcting code to the input pattern. The method also includes hashing the first codeword.

In one embodiment, the input pattern is a metric associated with a user such as a first measurement of a biometric or a first measurement of a pattern of behavior. In another embodiment, the hash of the first codeword is stored. In another embodiment, the hash of the first codeword is compared to a stored hash and the input pattern is authenticated when the two hashes match.

In another embodiment, the input pattern is translated by an offset and the first codeword is derived from the translated input. In a related embodiment, the hash of the first codeword is then compared to a stored hash and the input pattern is authenticated when the two hashes match.

In another embodiment, a key is generated using an encryption algorithm and the hash of the first codeword as the key generation seed. In a related embodiment, the key is used to encrypt a message. The key may further be used to decrypt the encrypted message. In a related embodiment, the key is used to decrypt a message without having been previously used to encrypt the message. The encrypted message that is decrypted may include the offset in an unencrypted form. In another related embodiment, the key is used to sign a message.

In another embodiment, a key pair is generated using an asymmetric encryption algorithm and the hash of the first codeword as the key generation seed. The key pair includes a public key and a private key. In a related embodiment, the public key is transmitted to an authentication entity.

In general, in another aspect, the invention relates to an apparatus for generating a fuzzy commitment from an input pattern. The apparatus includes an input device that receives an input pattern from a user and a mapper that maps the input pattern to a first codeword. The first codeword is selected at random from a plurality of codewords associated with an error-correcting code. The method also includes an offset calculator that calculates an offset between the input pattern and the first codeword, and a hasher that hashes the first codeword.

In one embodiment, the input device accepts a metric associated with a user such as a first measurement of a biometric or a first measurement of a pattern of behavior. In another embodiment, the apparatus also includes a storage device for the offset. In another embodiment, the apparatus includes a storage device for the offset and the hash of the first codeword.

In another embodiment, the apparatus includes a key generator that generates a key using an encryption algorithm and the hash of the first codeword as the key generation seed. In one embodiment, the apparatus also includes an encryption device that encrypts a message with the key. In another embodiment, the apparatus includes a decryption device that decrypts an encrypted message with the key. In another embodiment, the apparatus includes both an encryption device that decrypts an encrypted message with the key and a decryption device that decrypts the encrypted message with the key. In another embodiment, the apparatus includes a signature device that signs a message with the key.

In another embodiment, the apparatus includes a key generator that generates a key pair using an asymmetric encryption algorithm and the hash of the first codeword as the key generation seed. The key pair includes a public key and a private key. In a related embodiment, the apparatus also includes a transmission device that transmits the public key to an authentication entity.

In one embodiment, the apparatus also includes a key generator, an encryption device, and a concatenator. The key generator generates a key pair using an encryption algorithm and the hash of the first codeword as the key generation seed. The encryption device encrypts a message using the key and the concatenator joins the offset to the encrypted message.

In general, in another aspect, the invention relates to an apparatus for generating a fuzzy commitment from an input pattern. The apparatus includes an input device that receives an input pattern from a user and a codeword generator that produces a first codeword from the input pattern. The first codeword is produced by applying a decoding function of an error-correcting code to the input pattern. The method also includes a hasher that hashes the first codeword.

In one embodiment, the input device accepts a metric associated with a user such as a first measurement of a biometric or a first measurement of a pattern of behavior. In another embodiment, the apparatus includes a storage device for the hash of the first codeword. In another embodiment, the apparatus also includes a comparator that compares the hash of the first codeword to a store hash and authenticates the input pattern when the two hashes match.

In another embodiment, the apparatus includes a translator that translates the input pattern by an offset. The codeword generator in this embodiment produces a codeword from the translated offset. In a related embodiment, the apparatus also includes a comparator that compares the hash of the first codeword to a store hash and authenticates the input pattern when the two hashes match.

In a related embodiment, the apparatus includes a key generator that generates a key using an encryption algorithm and the hash of the first codeword as the key generation seed. In one embodiment, the apparatus also includes an encryption device that encrypts a message with the key. In another embodiment, the apparatus includes a decryption device that decrypts an encrypted message with the key. In a related embodiment, the encrypted message includes the offset in an unencrypted form. In another embodiment, the apparatus includes both an encryption device that decrypts an encrypted message with the key and a decryption device that decrypts the encrypted message with the key. In another embodiment, the apparatus includes a signature device that signs a message with the key.

In another embodiment, the apparatus includes a key generator that generates a key pair using an asymmetric encryption algorithm and the hash of the first codeword as the key generation seed. The key pair includes a public key and a private key. In a related embodiment, the apparatus also includes a transmission device that transmits the public key to an authentication entity.

In general, in one aspect, the invention relates to a method for registering an input pattern. The method includes receiving an input pattern from a user and mapping the input pattern to a first codeword. The first codeword is selected at random from a plurality of codewords associated with an error-correcting code. The method also includes calculating an offset between the input pattern and the first codeword, hashing the first codeword, and storing the offset and a hash of the first codeword. In one embodiment, the input pattern received includes a first measurement of a biometric associated with a user. In another embodiment, the input pattern includes a first measurement of a pattern of behavior associated with a user.

The foregoing and other objects, aspects, features, and advantages of the invention will become more apparent from the following description and from the claims.

### Brief Description Of The Drawings

In the drawings, like reference characters generally refer to the same parts throughout the different views. Also, the drawings are not necessarily to scale, emphasis instead generally being placed upon illustrating the principles of the invention.
FIG. 1 is a block diagram showing an error-correcting code, a portion of which is used in aspects of the invention.
FIG. 2 is an example of decoding with unconstrained codewords.
FIG. 3 is an example of mapping with constrained codewords.
FIG. 4 is an example of decoding with constrained codewords and an offset.
FIGs. 5A and 5b are a comparison of the security levels associated with different numbers of codewords.
FIG. 6 is a functional block diagram of one aspect of a fuzzy commitment.
FIG. 7 is a functional block diagram of another aspect of a fuzzy commitment.
FIG. 8 is a functional block diagram of the registration of an input pattern.
FIG. 9 is a functional block diagram of the registration of an input pattern using unconstrained codewords.
FIG. 10 is a functional block diagram of the authentication of a registered input pattern.
FIG. 11 is a functional block diagram of the registration of an input pattern using a key.
FIG. 12 is a functional block diagram of the registration of an input pattern using a key and unconstrained codewords.
FIG. 13 is a functional block diagram of the authentication of a registered input pattern based on the response to a challenge message using a key.
FIG. 14 is a functional block diagram of the encryption of a message.
FIG. 15 is a functional block diagram of the encryption of a message using unconstrained codewords.
FIG. 16 is a functional block diagram of the decryption of a message using unconstrained codewords.
FIG. 17 is a functional block diagram of the derivation of a key using a hash of a codeword.
FIG. 18 is a functional block diagram of the derivation of a key using a previously calculated offset or unconstrained codewords.
FIG. 19 is an apparatus for registering an input.

### Description

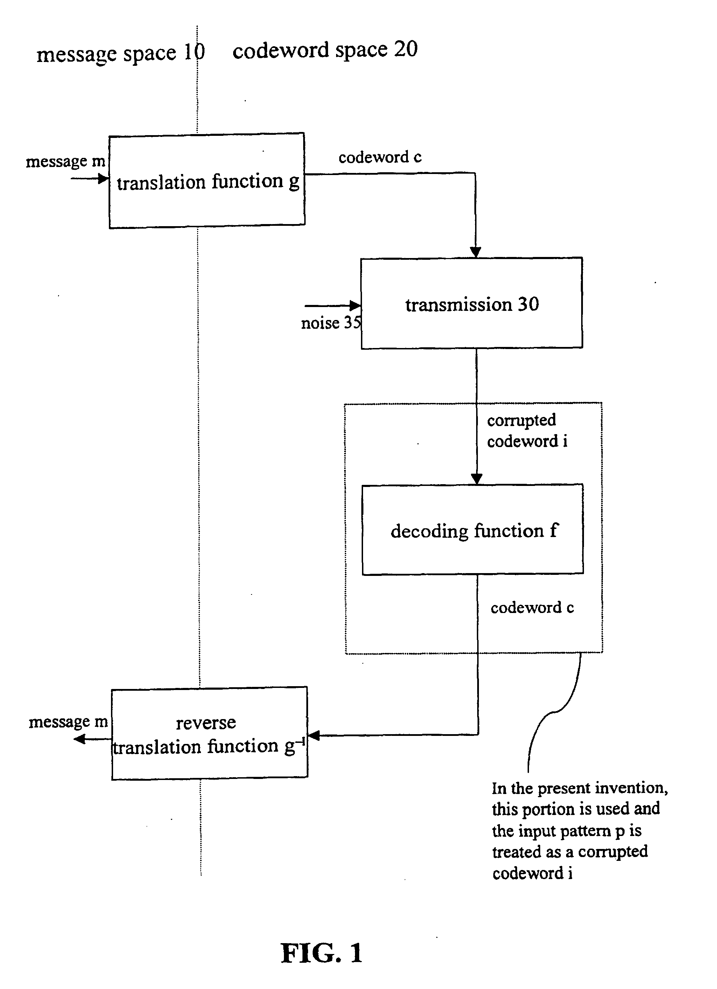

Referring to FIG. 1, an error-correcting code is illustrated. A portion of an error-correcting code is used in embodiments of the invention. Generally, an error-correcting code is used to enable transmission of a message intact over a noisy communication channel. A message m to be transmitted is chosen from message space 10. The set of messages M in message space 10 may be represented mathematically as M = {0, 1}^{k} where each message m in the set of messages M is a binary k-bit string. There are 2^{k} messages in the set of messages M because each bit in the k-bit string can have one of two values.

The message m is provided as input to a translation function g. The translation function g translates the message m into a codeword c in codeword space 20. The translation function g represents a one-to-one mapping of a message m from message space 10 to a codeword c in codeword space 20. Accordingly, for each message m, there is one corresponding codeword c. An error-correcting code for use with a binary set of messages M that are k-bits in length contains a set of codewords C including 2^{k} codewords since there is one codeword c for each of the 2^{k} messages. The operation of the translation function g can be described mathematically as g: M → C. The set of codewords C in codeword space 20 may be described mathematically as C ⊆ {0, 1}ⁿ where each codeword c in the set of codewords C is a binary n-bit string. Generally, the message m is different from codeword c at least because codeword c contains redundant elements. If a codeword c contains redundant elements, the length of the codeword c bit string n will be greater than the length of the message m bit string k.

The codeword c is transmitted 30 over a communication channel. Noise 35 may be introduced during transmission 30 so that a corrupted codeword i, which is generally some variation of codeword c, is received at the receiving end of the communication channel. The corrupted codeword i is provided as input to a decoding function f. The decoding function f reconstructs the codeword c from the corrupted codeword i. The redundant elements of the codeword c allow the decoding function to perform this reconstruction.

The decoding function f maps a corrupted codeword i to a codeword c in the set of codewords C. A corrupted codeword i may be an arbitrary n-bit binary string. When the decoding function f is successful, it maps a corrupted codeword i to the nearest codeword c in the set of codewords C. In this context, the nearest codeword c is the codeword c that is the closest by an appropriate metric from the corrupted codeword.

The task of mapping an arbitrary string to its nearest codeword is known as the maximum likelihood decoding problem. Practical classes of codes with polynomial-time solutions to this broad problem are at present unknown. Conventional decoding functions perform a more limited task in that they successfully decode any word that lies within a certain radius of some codeword. Such decoding functions can be used in embodiments described herein.

Generally, when a decoding function f fails, it outputs φ. (Some error correcting codes may operate somewhat differently. For example, list decoding functions f yield a set of candidate codewords, rather than a single correct one. The underlying principles remain the same in such settings.) The operation of the decoding function f can be described mathematically as f: {0, 1}ⁿ → C ∪ {φ}. The reverse translation function g⁻¹ is used upon receipt of a reconstructed codeword c to retrieve the original message m.

The robustness of an error-correcting code depends on the minimum distance of the code. In this description, Hamming distance and Hamming weight will be used as an example of a way to measure the minimum distance of a binary block code. If the Hamming weight of an n-bit binary string u is defined to be the number of '1' bits in u and the Hamming weight of an n-bit string u is denoted by ∥ u ∥, then the Hamming distance between two binary bitstrings u and v is defined to be the number of bits in which the two strings differ. The Hamming distance between two binary bitstrings u and v is denoted by ∥ u ⊕ v ∥.

The minimum distance of a convolution code is defined without reference to Hamming distance or Hamming weight. The use of Hamming distance or Hamming weight as an example here does not indicate any intent to limit an embodiment to these metrics as the only appropriate metrics of the minimum distance of an error-correcting code. Another metric for a set of sequences whose elements are nonbinary, for example, would be the L_{∞} norm, a measure of the maximum difference between elements. The L_{∞} difference between the sequence u = {3, 4, 5} and the sequence v = {10, 5, 1} would be 7.

A decoding function f has a correction threshold of size t if it can correct any set of up to t errors. In other words, the decoding function f can successfully decode any corrupted codeword i whose errors are less than or equal to the correction threshold t of the decoding function. The error in a corrupted codeword i can be described as the offset δ from the nearest codeword c. In a binary block code where the Hamming weight of the corresponding offset δ is less than or equal to the bit correction threshold t, the decoding function f will successfully decode a corrupted codeword i to a codeword c in the set of codewords C. This concept is expressed mathematically as follows: given c ∈ C and δ ∈ {0, 1}ⁿ with ∥ δ ∥ ≤ t, then f (c + δ) = c.

Generally, the Hamming distance between any two codewords in the set of codewords C is greater than two times the correction threshold (2t). If the Hamming distance between codewords were not greater than 2t, then a corrupted codeword i would exist that could be decoded into more than one codeword. The neighborhood of a codeword c comprises the subset of all possible corrupted codewords that the decoding function f maps to the codeword c. The neighborhood of a codeword c is denoted as f⁻¹(c). The decoding function f is generally such that any corrupted codeword i in f'⁻¹(c) is closer to the codeword c than to any other codeword.

For example, given a message m that is one bit long (k = 1), a codeword c that is three bits long (n =3), a set of two codewords C consisting of 000 and 111 (C = {000, 111}), and a decoding function f that computes majority, the correction threshold t for the decoding function t equals one bit error (t = 1). The decoding function f maps a corrupted codeword i consisting of three binary bits to 000 if at least two bits are 0 and to 111 if at least two bits are 1. The correction threshold t indicates that the decoding function f can correct a single bit error because changing a single digit in either 000 or 111 does not change the majority.

The coding efficiency of an error-correcting code is the ratio of the bit length of a message m to the bit length of a codeword c. The coding efficiency (k / n) measures the degree of redundancy in the error-correcting code. The lower the coding efficiency, the more redundancy in the codewords. The error-correcting code described in this example has a coding efficiency of 1/3. In general, codes that can correct a large number of errors have a low coding efficiency.

Error-correcting codes may be defined for non-binary spaces as well, and it is intended that the principles described here can be extended to such spaces.

It should be noted, however, that an error-correcting code traditionally involves changing a message m to a codeword c before transmission 30. In some situations, however, the translation function g cannot be applied effectively. For instance, when the message m itself contains errors, generating redundancy is problematic. The errors in the message m may well be propagated and reinforced by the redundancy in the corresponding codeword c. This situation exists in the case of biometric identification. Biometric readings are prone to errors and are typically not repeatable; accordingly, a biometric reading, also known as a template, should be considered a message m that includes errors. Thus, embodiments of the present invention do not use error-correcting codes in the traditional way.

Embodiments of the present invention use the decoding function f of an error-correcting code to relate an input pattern p to a codeword c. In some embodiments, the input pattern p is treated as a corrupted codeword i in an error-correcting code. In such embodiments, the decoding function f decodes the input pattern p into a codeword c as if the input pattern were a corrupted codeword i. In other embodiments, the input pattern p is mapped to a codeword c within the set of codewords C associated with a decoding function f. In these embodiments, such a codeword c is randomly selected from the set of codewords associated with a decoding function f. Embodiments of the invention do not make use of the translation function g or the reverse translation function g⁻¹ of the error-correcting code. In consequence, such embodiments do not map a message m from the message space 10 to a codeword c from the set of codewords C in codeword space 20. Nor do such embodiments map a codeword c from the set of codewords C in codeword space 20 back to a message m from the message space 10. In fact, such embodiments do not use the message space 10 at all.

The commonest class of error-correcting codes are linear error-correcting codes. Almost all of the error-correcting codes presently used in practice are linear. It is convenient, although not necessary, to choose the decoding function of a linear error-correcting code for use in embodiments of the present invention. One property of linear error-correcting codes that is useful in a number of applications is that it is easy to select a codeword c uniformly at random from the set of codewords C.

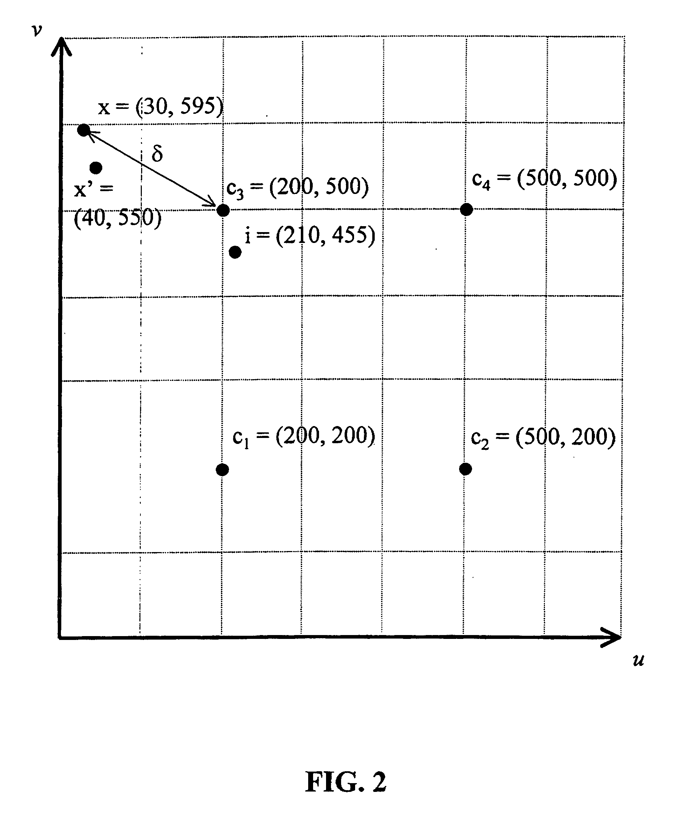

Referring to FIG. 2, a fuzzy commitment scheme F includes mapping an input pattern p to a codeword c. The input pattern p may be any sort of input pattern, including a biometric reading, a digital image, a signature drawn on a graphical input device, and the like. The n-bit string that represents the input pattern is referred to as a witness x. The witness x is mapped to a codeword c which is also an n-bit string; this mapping is referred to as the commitment portion of a fuzzy commitment scheme F. The codeword c can be considered to be the committed value of the witness x that maps to it.

A witness x can be uniquely expressed as the codeword c to which it maps. The offset δ is the offset between the witness x and that codeword c. The offset δ is an n-bit string that expresses the differences between the two n-bit strings that are the witness x and the codeword c. The witness x is likewise equivalent to the codeword c and the associated offset δ, mathematically expressed as x = c + δ. The offset δ may be denoted mathematically as δ ∈ {0, 1}ⁿ such that x = c + δ.

An example geometric analogy for the mapping between a witness x and a codeword c according to one embodiment of the present invention is shown in FIG. 2. The set of codewords C are shown as the set of points c₁, c₂, c₃, and c₄ on the *u-v* plane; mathematically expressed as C = {c₁, c₂, c₃, c₄}. The witness x is shown as a point on the *u-v* plane in FIG. 2 with the coordinates (30, 595). The decoding function f associated with this example, but not shown, maps an input, which would traditionally be a corrupted codeword i, to the nearest codeword c within the set of codewords C. Accordingly, since in this example the input to the decoding function is the witness x, the decoding function f maps the witness x to the nearest codeword, codeword c₃. This process is mathematically expressed as f(x) = c₃. The codeword that the input maps to, in this case codeword c₃, is the codeword that is used to form the commitment of the input which is referred to in this application as the committed codeword. The offset δ between the witness x and the committed codeword c₃ is defined as (*u -* 170, *v* + 95) where *u* and *v* are the two axes of the *u-v* plane. In one embodiment of a fuzzy commitment scheme F, the codeword c is concealed while the offset δ is left in plaintext, in other words, the offset δ is not encrypted.

Note that FIG. 2 illustrates a geometric analogy of a particularly simple case in which the decoding function f is always successful, having no minimum distance, in contravention to the usual case.

The codeword c, derived from the mapping of the witness x, is hashed with a one-way function known as a hash function h. A hash function h is a function that takes an input and produces an output such that is impractical to figure out what input corresponds to a given output and to find another input that produces the same output. Known hash functions take an arbitrary length input and produce an output of fixed length. This process can be expressed mathematically as h: {0, 1}ⁿ → {0, 1}^{*l*}. Common classes of hash functions include hash functions based on block ciphers and hash functions with dedicated designs. Popular hash functions include SHA-1, MD5, RIPE-MD, HAVAL, and SNERFU. For a fuzzy commitment scheme F, hashing can be done with any appropriate hash function h. The output of a hash function h is known as the hash of the input. The hash of the codeword is referred to as h(c). In one embodiment, a fuzzy commitment scheme F accepts a witness x and a committed codeword c as input and produces a hash of the committed codeword h(c) and the offset δ between the witness x and the committed codeword c as output. Such a fuzzy commitment is expressed mathematically as F(c, x) = ( h(c), (x - c)) where F: ({0, 1}ⁿ, {0, 1}ⁿ) → ({0, 1}^{*l*}, {0, 1}ⁿ).

In some embodiments, the hash of the committed codeword h(c) in association with the offset δ is referred to as the blob y. In other embodiments, the blob y refers the hash of the committed codeword h(c) without an associated offset δ. The blob y may be used in a variety of applications. The original creation of a blob y through the application of a fuzzy commitment scheme F to a witness x is known as the commitment to a codeword c. The offset δ, that is part of the blob y in some embodiments, provides some information about the witness x. However, the blob y provides the remaining information needed to specify the witness x, namely the codeword c, in a concealed form only.

In one embodiment, a three step process is used to decommit a codeword c given a blob y and a second witness x'. In this embodiment, the blob y comprises the hash of the committed codeword c in association with the offset δ. First, the second witness x' is translated by the offset δ into what we will call the corrupted codeword i. Second, the corrupted codeword i is decoded into a codeword c by the translation function f. We call the result of the translation of a second witness x' by the offset δ a corrupted codeword i due to its relationship with the decoding function f. Where the corrupted codeword i is close enough to the original witness x, the decoding step will recover the original committed codeword c. Third, the codeword c is hashed to form a hashed codeword h(c). If the hash of the codeword h(c) matches the hash of the codeword h(c) in the blob y, then the decommitment of the blob y is successful. Otherwise, the decommitment fails. If f is an efficient decoding function, the decommitment will also be an efficient process.

Still referring to FIG. 2 as an example of one embodiment of the commitment process, the witness x is decoded into the committed codeword c₃. The offset δ between the witness x and the committed codeword c₃ is calculated. The committed codeword c₃ is hashed. A blob y (not shown) is created by associating the offset δ with the hash of the committed codeword h(c₃).

Decommitment requires a blob y and use of the associated decoding function f. The blob y from FIG. 2 is a hash of the committed codeword h(c₃) and the offset δ, mathematically represented as y=(h(c₃), δ). The offset δ reveals the location of the witness x relative to the committed codeword c₃, but does not reveal any information about the absolute location of the committed codeword c₃ or the witness x on the *u-v* plane. Thus, assuming that the hash function h is a secure one-way function, the only information that the blob y effectively reveals about the witness x is that it takes the form (*u* + 170, *v* - 95) for some points (*u, v*). Subject to this constraint, the witness x could otherwise lie anywhere in plane.

Decommitment of the blob y, according to this embodiment, begins with the presentation of a second witness x' that is likely to be near the unknown witness x. In FIG. 2, the second witness x' is shown as a point on the *u-v* plane with the coordinates (40, 550). The second witness x' is translated by the offset δ, just as the witness x was translated to reach the committed codeword c₃. The corrupted codeword i is represented as a point on the u-v plane with the coordinates (210, 455). Mathematically, i = x' - δ. The decoding function f then decodes the corrupted codeword i into the nearest codeword, which in the geometric analogy of FIG. 2 is codeword c₃. Finally, a hash of the nearest codeword is compared to the hash of the codeword h(c₃) in the blob y. When the second witness x' is near the original unknown witness x, the nearest codeword will be the committed codeword c₃, the hashes will match, and the decommitment will be successful. Thus, the selection of a second witness x' close to the witness x and the use of the decoding function f associated with the blob y in FIG. 2 enable c₃ to be decommitted.

In a simple embodiment in which the decoding function f maps any witness x to the nearest codeword c without limit on its distance from that nearest codeword c, the use of the offset δ may not be necessary. The use of this embodiment may be appropriate when a decoding function f that uses unconstrained codewords is selected. For example, in the example of FIG. 2, the second witness x' is nearer the codeword c₃ than any other codeword. Thus, if the codewords in FIG. 2 are unconstrained, the corrupted codeword i would map directly to the codeword c₃, even without translation by the offset δ.

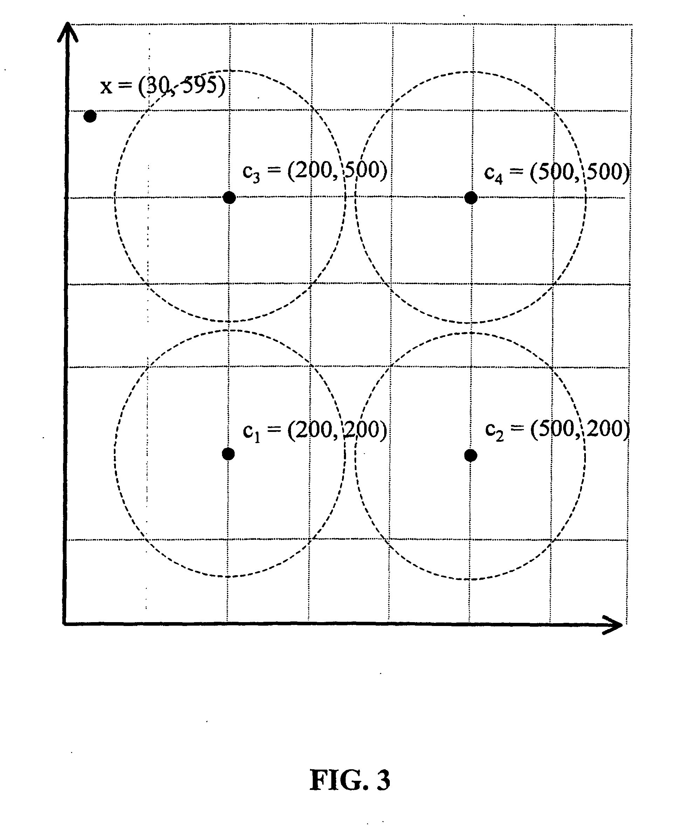

Referring to FIG. 3, in a more complex embodiment where the decoding function f maps a witness x to the nearest codeword c provided that its distance from the nearest codeword c falls within the minimum distance of the error-correcting code, the use of the offset δ may be useful. In this embodiment, a decoding function f that uses constrained codewords is selected. The dotted line circles surrounding each of the codewords C {c₁, c₂, c₃, c₄} represent the boundaries of the area that maps to the included codeword c. Any point outside the dotted line circle surrounding a codeword c will not map to that codeword c, even if the point outside the dotted line circle is closer to the enclosed codeword c than to any other codeword. For example, the witness x in the figure does not fall within the boundaries of an area that will map to any codeword c. The decoding function f may output φ. Alternately, x may be mapped to a codeword c selected at random from the set of codewords C associated with the given decoding function f. If witness x is randomly mapped to codeword c₂, then the offset δ between x and c₂ can be represented as (*u* + 470, *v* - 395).

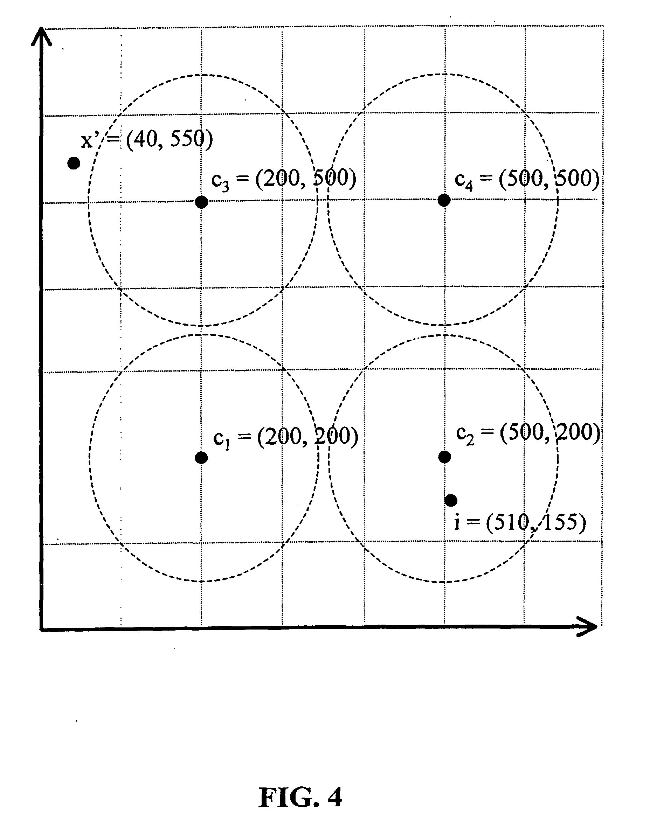

Referring to FIG. 4, in the embodiment representing the decommitment process that corresponds to the commitment process explained by FIG. 3, a second witness x' is translated by the offset δ in the decommitment process. When the second witness x' is close to original point x, the second witness x' can be reliably mapped to c₂ given the offset δ calculated in the commitment process. If the corrupted codeword i falls within the decoding constraints of the nearest codeword, the decoding function f decodes the corrupted codeword i into the nearest codeword. Here, the corrupted codeword i falls with the decoding constraints of codeword c₂, and so the decoding function f will map i to codeword c₂.

For a given witness x, such as an n-bit string representing a fingerprint template of a user, an attacker with knowledge of blob y = (h(c), δ) alone would be unable to find a second witness x' to decommit c. On the other hand, if the user were to present her finger to a reading device that generates a second witness x', in this case another n-bit string representing a fingerprint template of the user, it would be possible to decommit codeword c from blob y. Clearly, knowledge of blob y makes it possible to verify that a second witness x' is close to the original witness x, and thus to authenticate the user. Speaking generally, the second witness x' may be viewed as a fuzzy representation of the original witness x.

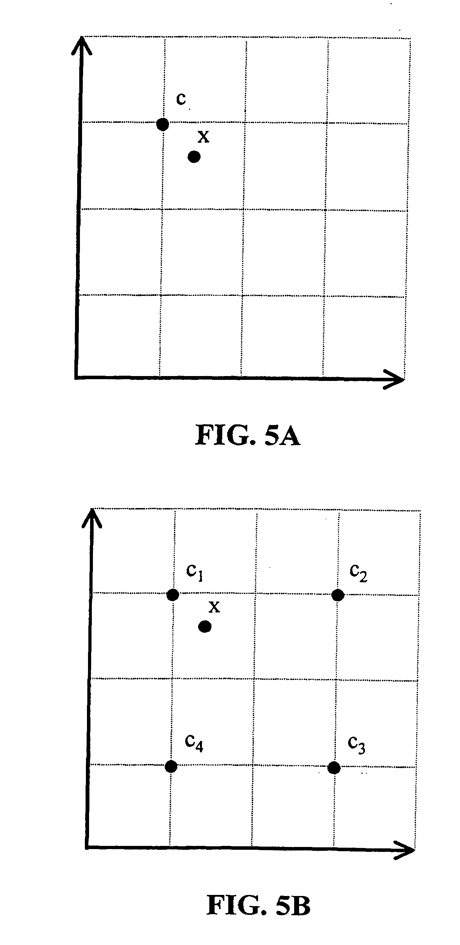

Referring to FIGS. 5A and 5B, the security of a commitment scheme depends on the commitment scheme being both concealing and binding. The property of concealment in a fuzzy commitment scheme F can be characterized as follows. Given that an attacker is able to determine the codeword c from a fuzzy commitment scheme F whereby the codeword c is selected at random from the set of codewords C and the witness x represents a random binary n-bit string, mathematically c ∈_{*R*} C and x ∈_{*R*} {0, 1}ⁿ, in time T with probability p(T). It is then possible for the attacker to invert h(c) from a random codeword z selected at random from the set of codewords C, mathematically z ∈_{*R*} C, in time T with probability ρ(T).

The time T and probability ρ(T) required to invert h(c) are evident from the following. Since the witness x and the codeword c are selected independently and uniformly at random, it is clear that the offset δ, mathematically defined as δ = x' - c, reveals no information about the codeword c. Therefore, the task of an attacker in determining the codeword c is equivalent to the task, given knowledge only of the hash of the codeword h(c), of finding a random codeword z selected from the set of codewords C such that the hash of the random codeword z equals the hash of the codeword c, mathematically h(z) = h(c). The underlying assumption in our derivation of the time T and probability ρ(T) required to invert h(c), that it is hard to invert a hash of a codeword h(c) from the set of codewords C, is somewhat non-standard. It is, however, consistent with common security assumptions about hash functions, such as those provided by the random oracle model. The same result is reached using more canonical assumptions.

The amount of information about the witness x that is contained in a the committed codeword c determines the level of concealment in a fuzzy commitment scheme F. The amount of information about the witness x contained in the committed codeword c depends on the number of codewords or, stated in another way, the size of the set of codewords C. The larger the set of codewords, the more information that the committed codeword contains about the witness x.

A comparison of FIG. 5A and FIG. 5B illustrates this concept through another geometric analogy. FIG. 5A shows a witness x and a set of one codeword C = {c}, both as points on a plane. A decoding function f will map the witness x in FIG. 5A to the nearest codeword c. Since there is a single codeword c in the set of codewords C in FIG. 5A, x must be mapped to codeword c and we have no information about the true location of the witness x on the plane. In comparison, FIG. 5B shows a witness x and a set of four codewords, all as points on a plane. A decoding function f will map the witness x in FIG. 5B to the nearest codeword c₁. Since there are four codewords in the set of codewords C = {c₁, c₂, c₃, c₄} in FIG. 5B and the witness x is mapped to codeword c₁, the location of the witness x is bounded. Clearly, the codeword c₁ contains a lot more information about the witness x in FIG. 5B than codeword c does in FIG. 5A even though the witness x and the codeword it maps to have the same relationship in FIG. 5A and FIG. 5B.

Since the hash of the committed codeword h(c) is always used and the unhashed committed codeword c is never used, the information about the witness x in the committed codeword c represents concealed information. That is, the information about the witness x in the committed codeword c is concealed by the hash. Thus, the codeword c represents information about the witness x that is concealed. Simply stated, the larger the set of codewords C, the more information about the witness x that is concealed.

Since error-correcting codes require that a binary set of codewords C contain 2^{k} codewords, k describes the size of a set of codewords C. Thus, a higher k represents more codewords and more concealed information about the witness x. Effectively, k is the parameter that dictates the level of concealment in a fuzzy commitment scheme F. For most applications, a k value of eighty should provide an adequate level of security. Under common assumptions about hash functions, such as the random oracle model, this security level will require an attacker seeking to match the committed codeword c in the blob y an average of 2⁷⁹ hash function h computations. This number of calculations is comparable to the computational effort required to factor RSA-1024 or find a collision in SHA-1.

Note that in some embodiments, where it is not necessary to protect the codeword c itself, the codeword c must still be drawn from a large set of codewords C in order to conceal the witness x. Consider, for example, a straightforward fingerprint authentication scenario meant to model the use of hashed passwords on UNIX systems. Here, the blob y includes an offset δ and is stored on a server. In order to demonstrate her identity, a user must simply present the server with a fingerprint image that successfully decommits the codeword c. The codeword c must be drawn from a large enough set of codewords C to ensure that the blob y does not reveal the witness x, which in this case is the fingerprint image itself. If the set of codewords C, as described by k, is small, then an attacker can guess the codeword c and extract the witness x from the blob y.

A commitment scheme is conventionally defined as binding if it is infeasible for any polynomially bounded player to produce valid decommitments of the commitment for two distinct witnesses x₁ and x₂. A fuzzy commitment scheme F applies a stronger notion of binding. A fuzzy commitment scheme F is defined as strongly binding if it is infeasible for any polynomially bounded player to produce a witness collision. A witness collision is a pair of witnesses x₁ and x₂ that are not close but that nonetheless both produce the same hash of a codeword h(c). A pair of witnesses x₁ and x₂ are close if the decoding function f produces the same codeword c from each of the translated witnesses, mathematically denoted as f(x₁ - δ) = f(x₂ - δ). In other words, closeness is defined as within the maximum distance allowed by the underlying error-correcting code. This definition of strongly binding subsumes the conventional definition of binding. Strong binding may, of course, also be defined in a conventional commitment scheme by allowing a witness collision to include any two witnesses, x₁ and x₂, that are distinct. Consequently, if a fuzzy commitment scheme F is strongly binding, then a fuzzy commitment scheme F is also binding.

Further, a fuzzy commitment scheme F is strongly binding if the associated hash function h is collision resistant. If an attacker is capable of finding a witness collision, then the attacker can find a collision on the hash function h. The length *l* of the binary bit string created by the hash function h dictates how hard it is to find a witness collision. Effectively, *l* is the parameter that dictates the strength of the binding in a fuzzy commitment scheme F. Under the common assumption that the most effective means of finding a collision in a hash function is a birthday attack whereby pairs of hashes are compared in an effort to find a match, 2^{*l*}^{/2} hashes, or calculations, are required to find a match. Hence, a *l* value of one hundred sixty, which corresponds to the image length of SHA-1, results in a minimum of about 2⁸⁰ calculations to match a hash. A strong binding commitment scheme is particularly useful for biometric authentication scenarios.

In the context of an error-correcting code, resilience refers to the maximum level of corruption, or number of errors, in a corrupted codeword i with which the decoding function f can reconstruct the codeword c. This is also known as the error correction threshold t of the error-correcting code. The error correction threshold t is bounded by the minimum distance between codewords in the set of codewords C (known as the minimum distance of the code). In the context of a fuzzy commitment scheme F, resilience refers to the maximum offset δ of a witness x from a codeword c with which the decoding function can derive the codeword c from the witness x. The resilience of a fuzzy commitment scheme is clearly bounded by the error correction threshold t of the error-correcting code used in its construction.

Again, since error-correcting codes require that a binary set of codewords C must contain 2^{k} codewords, k describes the size of a set of codewords C. Thus, a lower k represents fewer codewords and potentially a greater minimum distance of the code which represents a greater potential error-correction threshold t and a greater potential allowable offset δ. A lower k also represents a lower level of security in a fuzzy commitment scheme F. Clearly, the resilience of a fuzzy commitment scheme F is inversely related to its level of concealment. A fuzzy commitment scheme F achieves a tradeoff between resilience and concealment by varying k.

In general, the larger the coding efficiency k/n, the larger the minimum distance achievable in an error-correcting code. This is logical since coding efficiency k/n is proportional to the redundancy permitted in the code. The value n of an error-correcting code is typically fixed by the particular application. Similarly, k should be approximately 80 to prevent brute-force inversion attacks against the underlying hash function h in a fuzzy commitment scheme. Where the parameters k and n are fixed, there is no straightforward way to determine the most efficient error-correcting code. The design of codes to handle particular parameter sets is a broad research topic covered in some degree by classic texts. In general, practitioners resort to tables of the best known codes.

To get a sense of the level of resilience attainable in a practical setting, consider an application with a n value of 540. The n value of 540 roughly corresponds to a lower bound on the amount of information in a typical template extracted by the latest generation of fingerprint scanning chips manufactured by Veridicom. A practitioner may use a table of BCH codes, an efficiently computable class of error-correcting codes, and discover an error-correcting code with a k value of 76, a n value of 511, and a correction threshold t of 85 bits. The value of k in the selected error-correcting code offers an acceptable security level for a fuzzy commitment scheme F. A set of codewords C with a length of 511 bits may be used if some data from the application is truncated or compressed. Thus, the selected BCH error-correcting code would enable a practitioner to construct a fuzzy commitment scheme F that tolerates errors in any witness x of up to almost 17% of the component bits.

Here, each witness x has been selected uniformly at random from the set of n-bit binary strings. If a witness x were instead drawn from some non-uniform distribution D within the set of n-bit binary strings, then the security level of a fuzzy commitment scheme F will be affected to some degree. Some distributions will not result in a significant diminution in the security parameter k, while others will yield a lesser security level. A good security analysis will, in general, require detailed knowledge of the distribution of witnesses in the relevant application. Nonetheless, if a non-uniform distribution D is only slightly non-uniform, only a slight diminution in security will result. Larger dimunitions in security can be compensated for by increasing k. Of course, increasing k may reduce the resilience of the fuzzy commitment scheme F.

Similarly, the differences between the original witness x and a subsequent witness x' have been assumed to be random here. Note, however, that when the differences between the original witness x and a subsequent witness x' can be correlated, it is sometimes possible to construct a fuzzy commitment scheme F that achieves a higher level of resilience than the error correction threshold t of the selected error-correcting code. This is possible because correlations in the differences restrict the number of likely error patterns. If errors tend to occur in sequence, for example, then it is advantageous to use Reed-Solomon codes. Reed-Solomon codes are well-known for their use in the digital recording media such as compact discs, where so-called burst errors are common. An advantage of Reed-Solomon codes is that much progress has been made recently in achieving probable error correction beyond the error correction threshold t for this class of code. In certain cases, it may even be possible to use such codes to achieve good error correction under independence of bits in e.

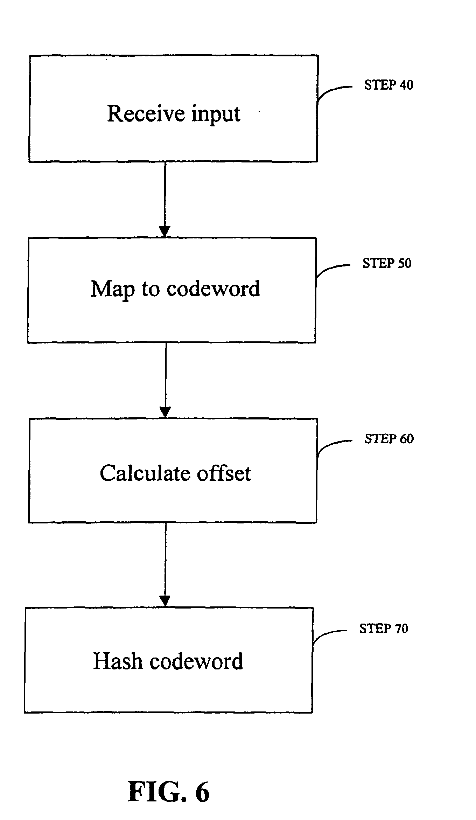

Referring to FIG. 6, one aspect of a fuzzy commitment includes receiving an input (STEP 40). In one embodiment, the input is the witness x. In one embodiment, the witness x is a first biometric reading, such as an iris scan, a measurement of certain features of a fingerprint, or the digital scan of an image such as a signature. In another embodiment, the witness x is a signature captured by a graphical interface. In another embodiment, the witness x is a digital image or a profile of mutable executable code such as a digital virus profile.

The input is mapped to a codeword (STEP 50). The mapping consists of randomly selecting a codeword c from the set of codewords C associated with an error-correcting code. In one embodiment, the set of codewords is constrained. In another embodiment, the decoding function f is part of a linear error-correcting code. In another embodiment, the decoding function f is from an error-correcting code with isometric codeword neighborhoods.

An offset δ between the input and the codeword c to which it was mapped is calculated (STEP 60). In one embodiment, the input, the codeword c, and the offset δ are all represented as binary n-bit strings. In another embodiment, the codeword c and the offset δ are all represented as binary n-bit strings and the input is represented as a longer binary string. In one variation of the foregoing embodiment, the binary string representing the input is truncated prior to the calculation of the offset δ. In another variation of the foregoing embodiment, the binary string representing the input is compressed prior to the calculation of the offset δ.

The codeword c is hashed (STEP 70). Hashing can be performed using any appropriate hash function h. In one embodiment, the hash function produces a binary string with a length 1 of approximately 160 bits.

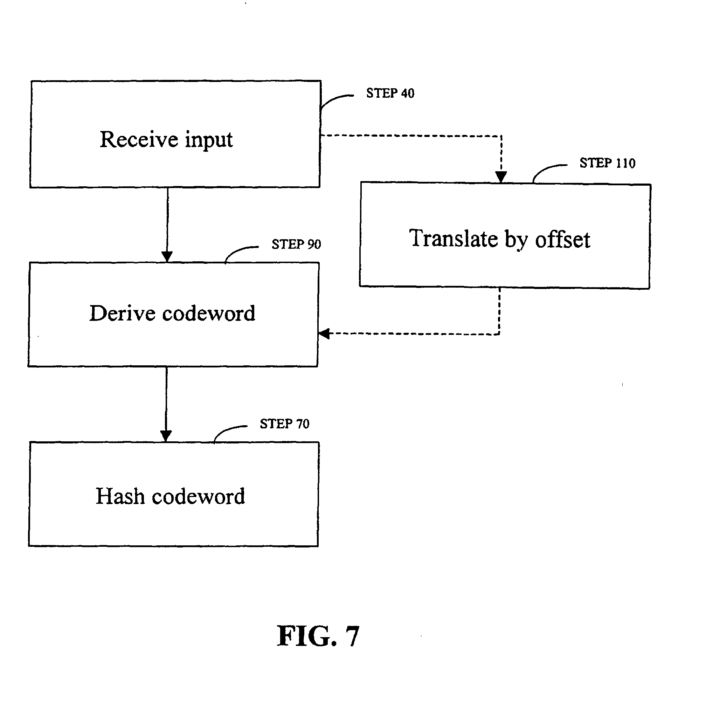

Referring to FIG. 7, another aspect of a fuzzy commitment includes receiving an input (STEP 40). A codeword is derived from the input (STEP 90). In one embodiment, the derivation is performed by a decoding function f of an error-correcting code. In one embodiment, the set of codewords associated with the error-correcting code is constrained. In another embodiment, the decoding function f is part of a linear error-correcting code. In another embodiment, the decoding function f is from an error-correcting code with isometric codeword neighborhoods.

In one embodiment, the error-correcting code has a dimension d in which codewords are of the form <Ra_1, Ra_2, ..., Ra_d> such that a_i is an integer and R is a real-valued code parameter and the decoding function f as applied to vector <x_1, x_2, ..., x_d> simply rounds each element x_i to the integer a_iR that is closest. In a related embodiment, where there are ambiguities, a deterministic or randomized tie-breaking algorithm is used, or both possibilities are checked.

In one embodiment, the decoding function f receives the input directly for decoding. In one variation of the foregoing embodiment, an offset δ between the codeword c and the input from which it was derived is calculated (STEP 60). In a further variation of the foregoing embodiment, the offset δ is stored. In another embodiment, the input is translated by a known offset δ (STEP 110) and a decoding function f of an error-correcting code derives the codeword from the translated input. In the foregoing embodiment, the translated input is a corrupted codeword i. In one variation of the foregoing embodiment, the known offset δ is retrieved from storage for use. The codeword c is hashed (STEP 70).

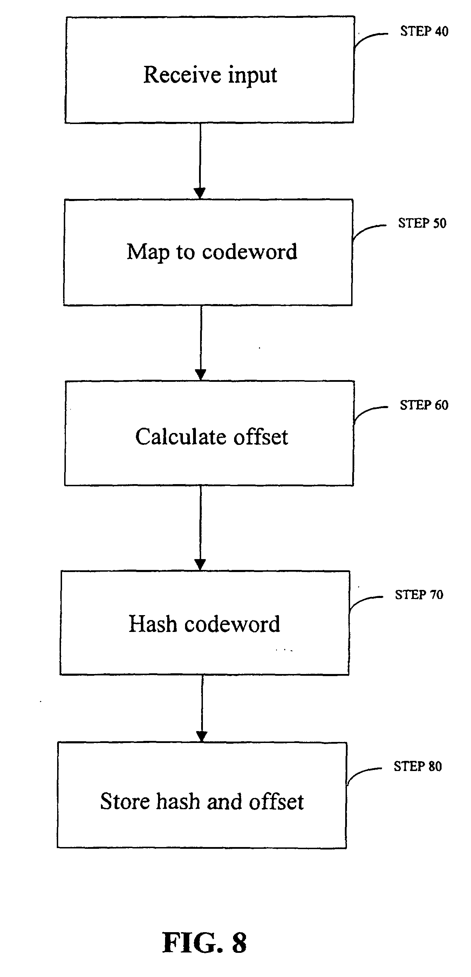

Referring to FIG. 8, an embodiment of a method for registering an input for later authentication includes receiving an input (STEP 40). The input is mapped to a codeword (STEP 50), and an offset δ between the input and the codeword c to which it was mapped is calculated (STEP 60). The codeword c is hashed (STEP 70).

The offset δ and the hash of the codeword h(c) are stored (STEP 80). In one embodiment, the hash of the codeword h(c) is stored on a hard disk. In one embodiment, the offset δ and the hash of the codeword h(c) are stored together. In another embodiment, the offset δ and the hash of the codeword h(c) are stored separately. In one embodiment, the hash of the codeword h(c), the offset, or both are stored on a CD-ROM. In another embodiment , the hash of the codeword h(c), the offset, or both are stored on a network. In another embodiment , the hash of the codeword h(c), the offset, or both are stored on a smartcard. In another embodiment, the hash of the codeword h(c), the offset, or both are stored on a personal digital assistant. In another embodiment , the hash of the codeword h(c), the offset, or both are stored on a magnetic strip, such as might be attached to a credit card-sized card. In another embodiment , the hash of the codeword h(c), the offset, or both are stored on a bar code.

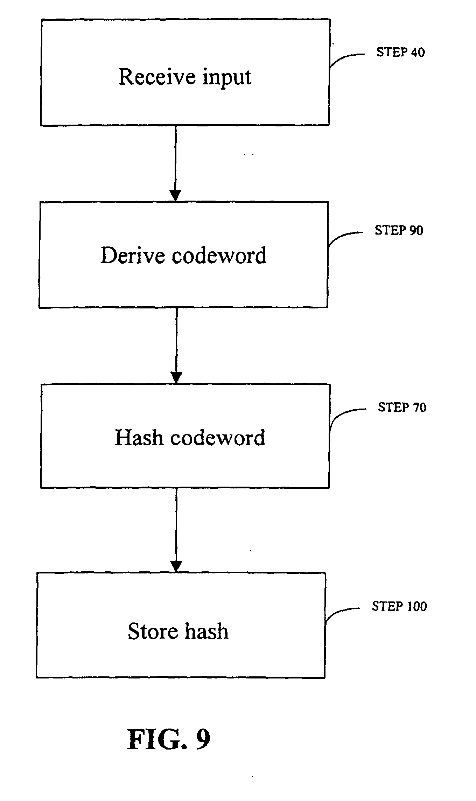

Referring to FIG. 9, an embodiment of a method for registering an input for later authentication includes receiving an input (STEP 40). A codeword is derived from the input as described above (STEP 90). The codeword c is hashed (STEP 70), and the hash of the codeword h(c) is stored (STEP 100).

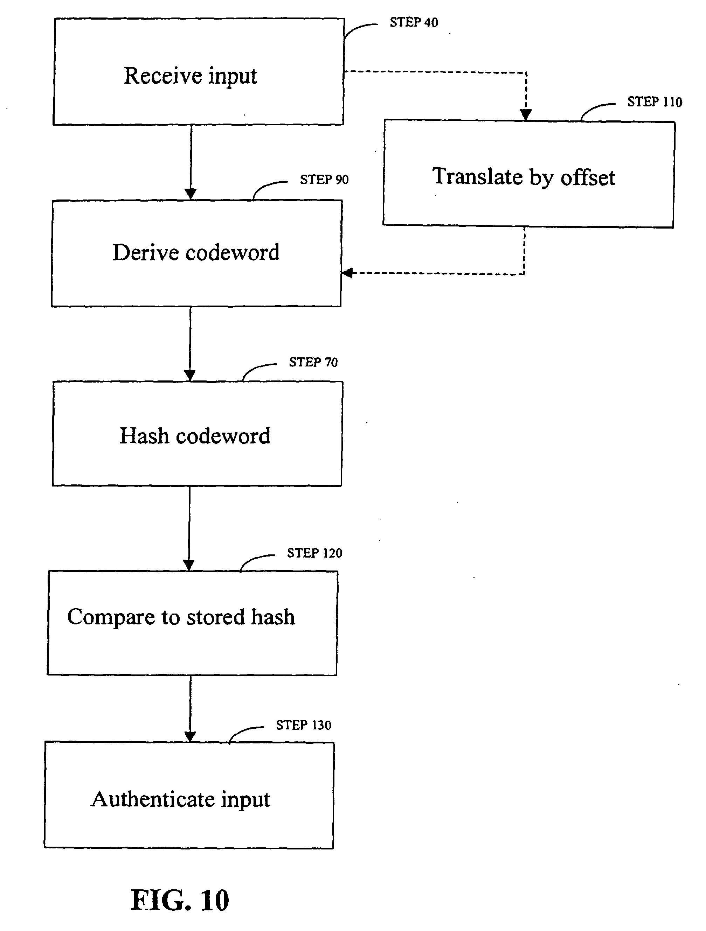

Referring to FIG. 10, an embodiment of a method for authenticating a registered input includes receiving an input as described above (STEP 40). In some embodiments, since an input has already been registered, the input is a second witness x'.

A codeword is derived from the input (STEP 90). In one embodiment, a decoding function f receives the input directly for decoding. In another embodiment, the input is translated by an offset δ (STEP 110) and then the input, now a corrupted codeword i, is communicated to a decoding function f for decoding.

The codeword c is hashed as described above (STEP 70). The hash of the codeword h(c) is compared to a stored hash (STEP 120). In one embodiment, the two hashes are considered a match where the entirety of each hash is a duplicate of the other. In one embodiment, the two hashes are considered a match where a portion of each hash is a duplicate of the other.

If the hash of the codeword h(c) matches a stored hash, the input is authenticated (STEP 130). In one embodiment, authentication results in a signal being returned in response to the input. In another embodiment, authentication results in permissions being granted in response to the input.

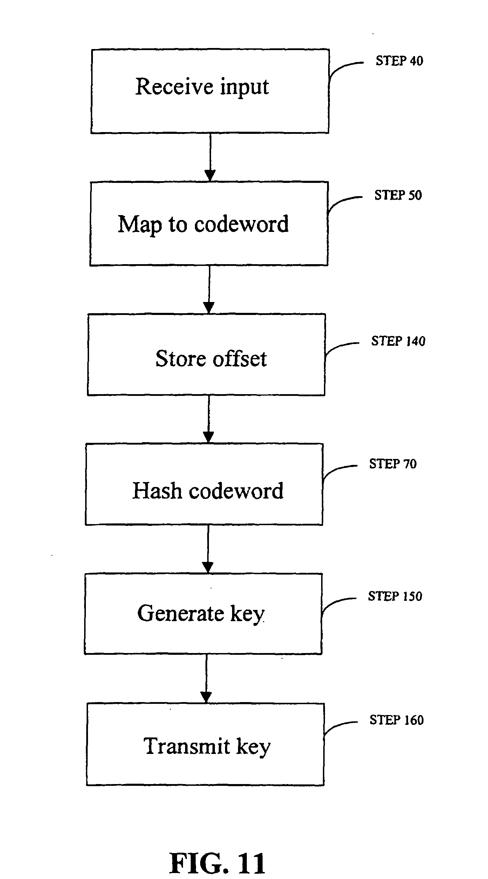

Referring to FIG. 11, an embodiment of a method for registering an input includes receiving an input as described above (STEP 40). In some embodiments, since an input is being registered, the input is a witness x. The input is mapped to a codeword as described above (STEP 50). An offset δ between the input and the codeword c to which it was mapped is calculated (STEP 60). The offset δ between the input and the codeword is stored (STEP 140). In one embodiment, the stored offset δ is appended to the public key. The codeword c is hashed (STEP 70).

A key is generated from the hash of the codeword h(c) (STEP 150). In one embodiment, the hash of the codeword h(c) itself may serve as the symmetric encryption key. In another embodiment, the key pair is generated with a symmetric encryption algorithm and the hash of the codeword h(c). In another embodiment, the key pair is generated with an asymmetric encryption algorithm and the hash of the codeword h(c). In another embodiment, the key pair is generated by feeding the hash of the codeword h(c) as a seed to an asymmetric key generation algorithm. In one embodiment, the asymmetric key generation algorithm is an RSA key pair generation algorithm.

In one embodiment, the key that is generated is transmitted to an authentication entity (STEP 160). In a variation of the foregoing embodiment, the transmitted key is the public key generated with an asymmetric encryption algorithm.

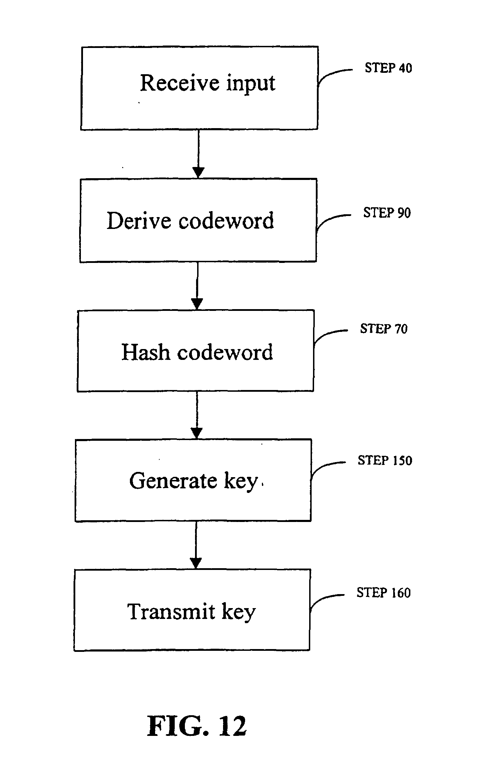

Referring to FIG. 12, an embodiment of a method for registering an input includes receiving an input (STEP 40), and deriving a codeword from the input (STEP 90). The codeword c is hashed (STEP 70), and a key is generated from the hash of the codeword h(c) (STEP 150). In one embodiment, the key that is generated is transmitted to an authentication entity (STEP 160).

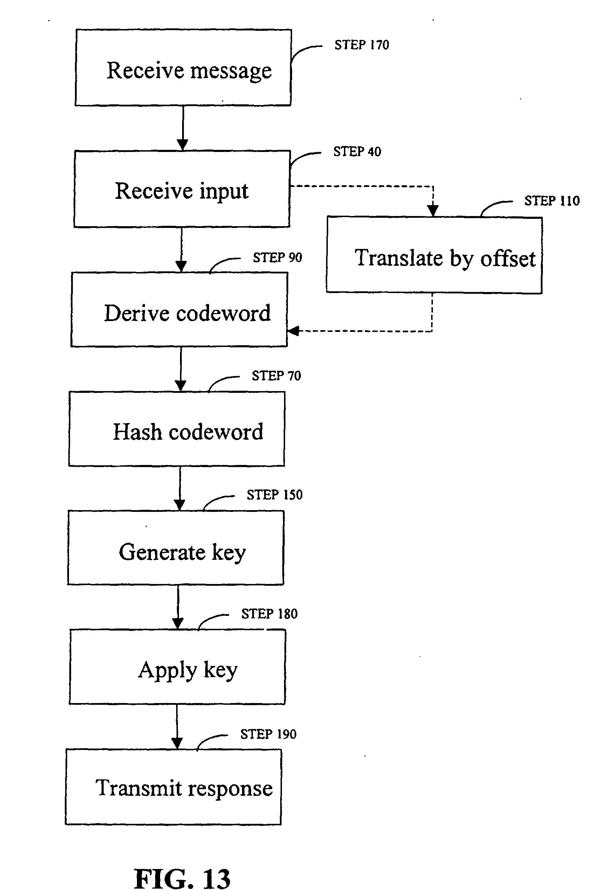

Referring to FIG. 13, an embodiment of a method for responding to a challenge message includes receiving a message m from an authentication entity (STEP 170). In one embodiment, the challenge message is encrypted. In another embodiment, the challenge message is in plaintext. Plaintext is unencrypted information, and is sometimes also referred to as cleartext. In one embodiment, the challenge message is time dependent. In another embodiment, the challenge message includes an encrypted message and an offset δ in plaintext. In another embodiment, the challenge message does not include an offset in plaintext.

An input is received (STEP 40), and a codeword is derived from the input (STEP 90). In one embodiment, the derivation is performed by a decoding function f of an error-correcting code. In one embodiment, the decoding function f receives the input directly for decoding. In another embodiment, the input is translated by an offset δ (STEP 110), and then the translated input, known as a corrupted codeword i, is communicated to the decoding function f for decoding. In one variation of the foregoing embodiment, the offset δ is taken from the challenge message.

The codeword c is hashed (STEP 70), and a key is generated from the hash of the codeword h(c) (STEP 150). A key is applied to the message m to create a response (STEP 180). In one embodiment, a symmetric key is applied to the message m to create a response. In another embodiment, a private key is applied to the message m to create a response. In a variation of the foregoing embodiments, the application of the key to the message m consists of the use of the key to encrypt the message m. In another variation of the foregoing embodiment, the application of the key to the message m consists of the use of the key to decrypt the message m. In another variation of the foregoing embodiment, the application of the key to the message m consists of the use of the key to sign the message m.

The response is transmitted (STEP 190). In one embodiment, the response is transmitted back to the authentication entity. In another embodiment, the response is transmitted to another entity. Transmission can be over a wired or wireless network or communications medium, for example over a packet-based network, or via a direct connection.

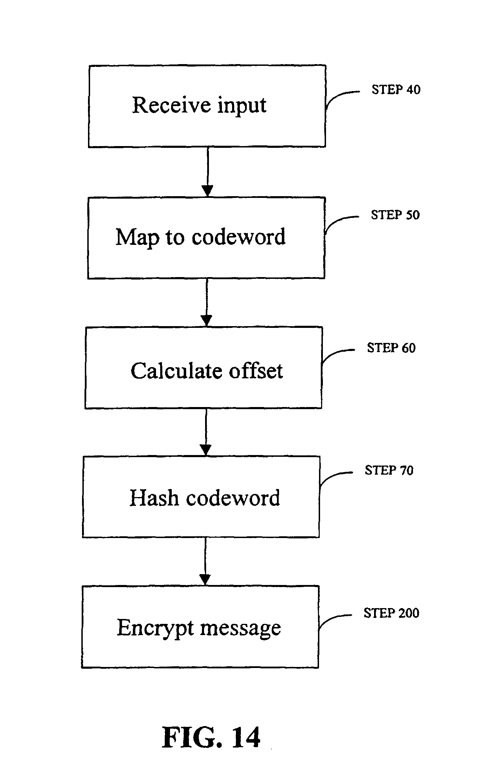

Referring to FIG. 14, an embodiment of a method for encrypting a message includes receiving an input as described above (STEP 40). In some embodiments, the input is a witness x. The input is mapped to a codeword (STEP 50), and an offset δ between the input and the codeword c to which it was mapped is calculated (STEP 60).

The codeword c is hashed (STEP 70), and a message is encrypted (STEP 200). In one embodiment, the message is encrypted using a symmetric encryption algorithm and the hash of the codeword h(c). In a variation of the foregoing embodiment, the message is encrypted using a symmetric encryption algorithm, the hash of the codeword h(c), and the offset δ between the input and the codeword c. In another embodiment, the message is encrypted using an asymmetric encryption algorithm and the hash of the codeword h(c). In a variation of the foregoing embodiment, the message is encrypted using an asymmetric encryption algorithm, the hash of the codeword h(c), and the offset δ between the input and the codeword c. In one embodiment, the offset δ is included in plaintext as a portion of the encrypted message. In another embodiment, the offset δ is stored but not included in the encrypted message.

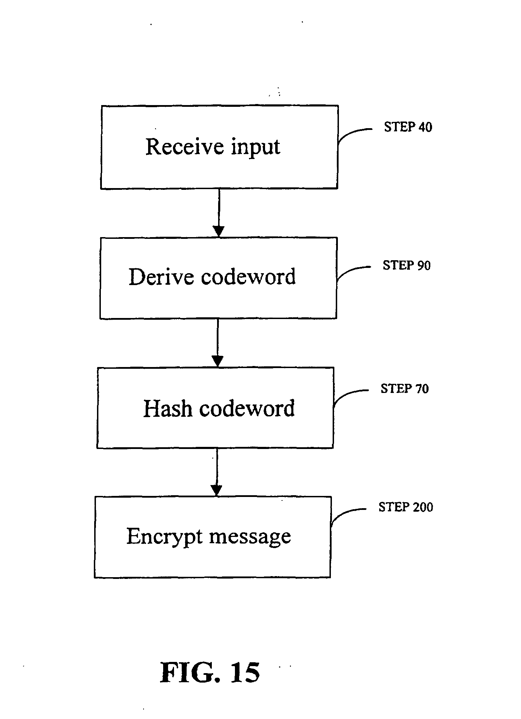

Referring to FIG. 15, an embodiment of a method for encrypting a message includes receiving an input as described above (STEP 40). In some embodiments, the input is a witness x.

A codeword is derived from the input as described above (STEP 90). In one embodiment, the derivation may be performed by a decoding function f of an error-correcting code. In one embodiment, the decoding function f receives an input directly for decoding. In another embodiment, the input is translated by an offset δ (STEP 110) and then the translated input, known as a corrupted codeword i, is communicated to the decoding function f for decoding. The codeword c is hashed (STEP 70), and a message is encrypted (STEP 200).

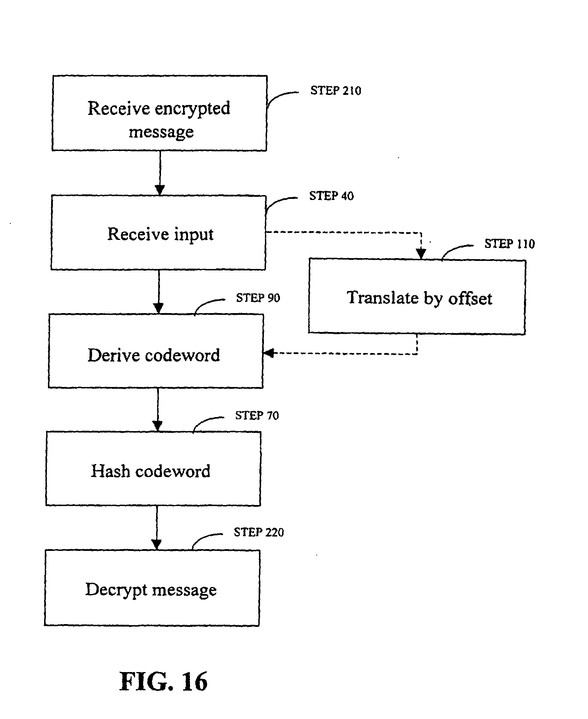

Referring to FIG. 16, an embodiment of a method for decrypting an encrypted message includes receiving an encrypted message (STEP 210). In one embodiment, the encrypted message includes an offset δ in plaintext. In another embodiment, the encrypted message does not include an offset δ in plaintext. An input is received (STEP 40).

A codeword is derived from the input pattern as described above (STEP 90). In one embodiment, the input is communicated directly to decoding function f for decoding. In another embodiment, the input is translated by an offset δ (STEP 110) and then the translated input, known as a corrupted codeword i, is communicated to the decoding function f for decoding. In one variation of the foregoing embodiment, the offset δ is taken directly from a plaintext portion of the encrypted message. In another variation of the foregoing embodiment, the offset δ is taken from storage and is not included as a portion of the encrypted message.

The codeword c is hashed (STEP 70), and key pair is generated from the hash of the codeword h(c). The encrypted message is decrypted (STEP 220). In one embodiment, a private key is used to decrypt the message m. In another embodiment, a private key is used to sign the message m. In another embodiment, a public key is used to decrypt the message m.

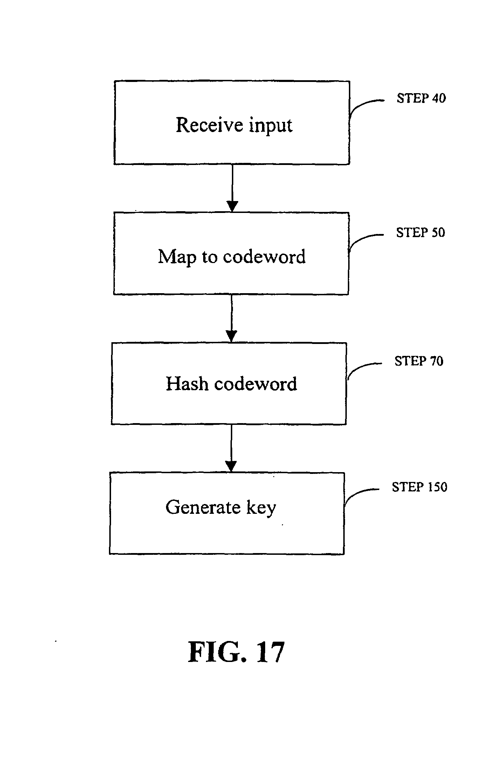

Referring to FIG. 17, an embodiment of a method for deriving a key includes receiving an input as described above (STEP 40). The input is mapped to a codeword (STEP 50), and an offset δ between the input and the codeword c to which it was mapped is calculated as described above. In one embodiment, the offset δ is stored for later use. The codeword c is hashed (STEP 70).

A key is generated as described above (STEP 150). In one embodiment, the message is encrypted with the key. In one variation of the foregoing embodiment, the message is later decrypted with the key. In another variation of the foregoing embodiment, the message is later decrypted with a related key. In another embodiment, the message is decrypted with the key. In another embodiment, the message is signed with the key.

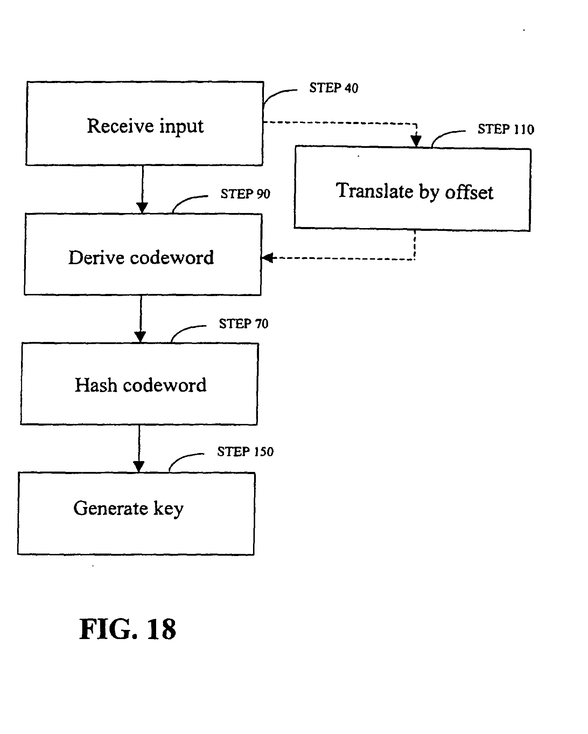

Referring to FIG. 18, an embodiment of a method for deriving a key includes receiving an input as described above (STEP 40). A codeword is derived from the input pattern as described above (STEP 90). In one embodiment, the input is communicated directly to decoding function f for decoding. In another embodiment, the input is translated by an offset δ (STEP 110) and then the translated input, known as a corrupted codeword i, is communicated to the decoding function f for decoding. In one embodiment, an offset δ between the input and the codeword c to which it was mapped is calculated as described above. In one embodiment, the offset δ is stored for later use. The codeword c is hashed (STEP 70), and a key is generated (STEP 150).

Apparatus that embody the foregoing methods and variations thereto are within the scope of the invention.

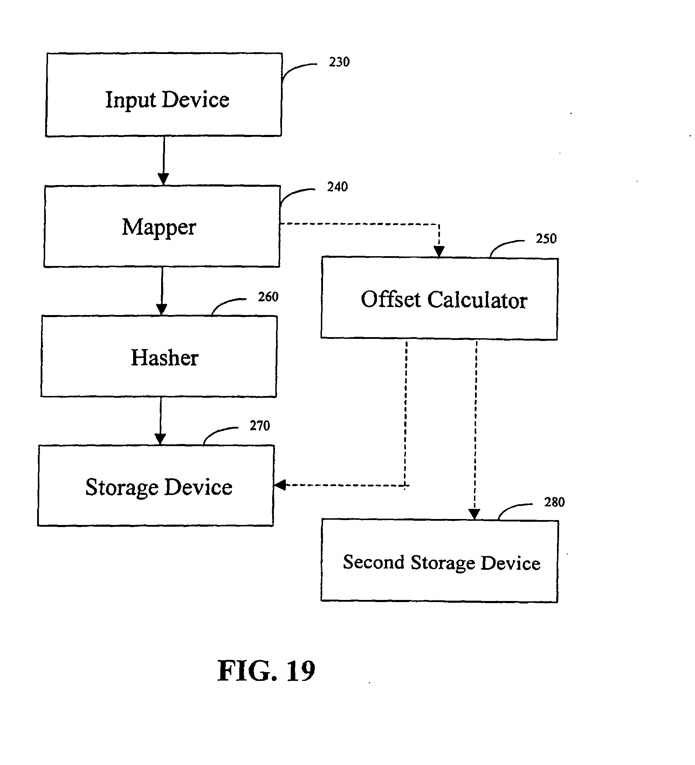

Referring to FIG. 19 for example, an embodiment of an apparatus for registering an input includes an input device (230) for receiving an input from a user. In one embodiment, the input device is a biometric scanning device. The input corresponding to such an embodiment may include an iris scan or a measurement of certain features of a fingerprint. In another embodiment, the input device is a non-biometric scanning device. The input corresponding to such an embodiment may include a digital scan of an image such as a signature. In another embodiment, the input device is a graphical input device. Variations according to this embodiment may include a touch sensitive screen and a heat sensitive screen. The input corresponding to this embodiment may be a signature captured by a graphical interface.

The apparatus also includes a mapper (240) in signal communication with the input device. The mapper maps the input pattern to a first codeword from the set of codewords C associated with an error-correcting code. In one embodiment, the mapper uniformly at random selects a codeword c. In another embodiment, the mapper selects among a set of codewords C that is constrained. In another embodiment, the mapper selects among a set of codewords C that is part of a linear error-correcting code. In another embodiment, the mapper selects among a set of codewords C that have isometric codeword neighborhoods.

The apparatus may also include, in some embodiments, an offset calculator (250) in signal communication with the mapper. The offset calculator of some embodiments calculates the offset δ between the input and the codeword c to which it was mapped. In one embodiment, the offset calculator accepts two binary n-bit strings representing the input and the codeword c and produces a third binary n-bit strings that represents the offset δ. In another embodiment, the offset calculator accepts a binary n-bit strings representing the codeword c and longer bit string representing the input, the offset calculator then truncates the input string and produces a second binary n-bit strings that represents the offset δ. In another embodiment, the offset calculator accepts a binary n-bit strings representing the codeword c and longer bit string representing the input, the offset calculator then compresses the input string and produces a second binary n-bit strings that represents the offset δ.

The apparatus also includes a hasher (260) in signal communication with the mapper. The hasher hashes the first codeword. The hasher may apply any appropriate one-way (hash) function h to the codeword c. In one embodiment, the hasher applies a hash function h built around a block cipher. In another embodiment, the hasher applies a hash function h which has a dedicated design. In one embodiment, the hasher may accept an n-bit string representing the codeword c and produce a longer 1-bit string representing the hash of the codeword h(c). In one embodiment, the hasher produces a binary string with a length 1 of approximately 160 bits.

The apparatus also includes a storage device (270) in signal communication with the hasher. The storage device stores a hash of the first codeword. In one embodiment, the storage device may also store an offset between the input pattern and the first codeword. In such an embodiment, the storage device (270) must be in signal communication with the offset calculator (250). In another embodiment, the offset δ may be stored in a separate storage device (280) in signal communication with an offset calculator. In such an embodiment, the storage device (280) must be in signal communication with the offset calculator (250). In one embodiment the storage is temporary, only long enough to enable reliable transmission.

## Claims

1. A method for generating a fuzzy commitment from an input pattern, the method comprising the steps of:
(a) receiving the input pattern from a user;
(b) selecting a codeword at random from a plurality of codewords associated with an error-correcting code; and
(c) mapping the input pattern to the codeword so as to calculate an offset between the input pattern and the codeword, the offset comprising the fuzzy commitment.

2. The method of claim 1 comprising a further step of calculating a function using the codeword as input to produce a function of the codeword, wherein the offset and the function of the codeword together comprise the fuzzy commitment.

3. The method of claim 1 comprising a further step of hashing the codeword to produce a hash of the codeword, wherein the offset and the hash of the codeword together comprise the fuzzy commitment.

4. The method of any one of claims 1 to 3, the method further comprising the step of storing the offset.

5. The method of claim 3, the method further comprising the step of storing the offset and the hash of the codeword.

6. The method of claim 5, the method further comprising the step of generating a key using an encryption algorithm and the hash of the codeword as a key generation seed.

7. The method of claim 3, the method further comprising the steps of:
(a) generating a key using an encryption algorithm and the hash of the codeword as the seed;
(b) encrypting a message with the key; and
(c) including the offset in plaintext with the encrypted message.

8. A method for generating a codeword from an input pattern so as to commit the codeword to a user for use with a fuzzy commitment, the method comprising the steps of:
(a) receiving the input pattern from the user; and
(b) deriving the codeword by applying an error-correcting decoding function to the input pattern.

9. The method of claim 8, comprising the further step of calculating a function using the codeword as input to produce a function of the codeword.

10. The method of claim 8, comprising the further step of hashing the codeword to produce a hash of the codeword.

11. The method of any preceding claim, wherein the step of receiving an input pattern comprises receiving an input pattern selected from the group of metrics associated with a user consisting of:
(i) a first measurement of a biometric, and
(ii) a first measurement of a pattern of behaviour,
(iii) a digital image, and
(iv) a profile of a mutable executable code.

12. The method of claim 10, the method further comprising the step of storing the hash of the codeword.

13. The method of claim 10, the method further comprising the steps of comparing the hash of the codeword to a stored hash and authenticating the input pattern when the hash of the codeword equals the stored hash.

14. The method of any one of claims 8 to 10, the method further comprising, prior to step (b), the step of translating the input pattern by an offset; and wherein step (b) comprises deriving the codeword by applying an error-correcting decoding function to the translated input pattern.

15. The method of claim 14, the method further comprising the steps of comparing the hash of the codeword to a stored hash and authenticating the input pattern when the hash of the codeword equals the stored hash.

16. The method of claim 14, the method further comprising the step of generating a key using an encryption algorithm and the hash of the codeword as a key generation seed.

17. The method of claim 6 or 16, the method further comprising the step of encrypting a message using the key.

18. The method of claim 6, 16 or 17, the method further comprising the step of decrypting the/an encrypted message using the key.

19. The method of claim 18, wherein the encrypted message includes the offset in plaintext.

20. The method of claim 6 or 16, the method further comprising the step of signing a message using the key.

21. The method of claim 6 or 16, wherein the step of generating a key using an encryption algorithm and the hash of the codeword as a key generation seed comprises generating a key pair using an asymmetric encryption algorithm and the hash of the codeword as a key generation seed, said key pair comprising a public key and a private key.

22. The method of claim 14 or 21, the method further comprising the step of transmitting the public key from the key pair to an authentication entity.

23. An apparatus for generating a fuzzy commitment from an input pattern, the fuzzy commitment comprising offset between the input pattern and a codeword, the apparatus comprising:
an input device for receiving the input pattern from a user;
a selector for selecting the codeword at random from a plurality of codewords associated with an error-correcting code; and
a mapper in signal communication with the input device and the selector, said mapper mapping the input pattern to the codeword so as to calculate the offset between the input pattern and the codeword to which the mapper maps the input pattern.

24. The apparatus of claim 23, further comprising a hasher in signal communication with the mapper, said hasher producing the hash of the codeword by applying a hash function to the codeword.

25. The apparatus of claim 23 or claim 24, the apparatus further comprising a storage device in signal communication with the mapper, said storage device storing the offset.

26. The apparatus of claim 23, the apparatus further comprising a storage device in signal communication with the mapper and the hasher, said storage device storing the offset and the hash of the codeword.

27. The apparatus of claim 23, the apparatus further comprising:
a key generator in signal communication with the hasher, said key generator generating a key using an encryption algorithm and the hash of the codeword as a key generation seed;
an encryption device in signal communication with the key generator, said encryption device encrypting a message using the key; and
a concatenator in signal communication with the encryption device and the mapper, said concatenator joining the encrypted message and the offset.

28. An apparatus for generating a codeword from an input pattern so as to commit the codeword to a user for use with a fuzzy commitment, the apparatus comprising:
an input device, said input device receiving an input pattern from the user; and
a codeword generator in signal communication with the input device, said codeword generator producing a codeword by applying a decoding function of an error-correcting code to the input pattern.

29. The apparatus of claim 28, the apparatus further comprising a hasher in signal communication with the codeword generator, said hasher producing a hash of the codeword by applying a hash function to the codeword.

30. The apparatus of any one of claims 23 or 29, wherein the input device comprises a reader that measures an input pattern selected from the group of metrics associated with the user consisting of:
(i) a first measurement of a biometric, and
(ii) a first measurement of a pattern of behaviour,
(iii) a digital image, and
(iv) a profile of a mutable executable code.

31. The apparatus of claim 29, the apparatus further comprising a storage device in signal communication with the hasher, said storage device storing the hash of the codeword.

32. The apparatus of claim 29, the apparatus further comprising a translator in signal communication with the input device, said translator producing a translated input pattern by translating the input pattern by an offset, and wherein the codeword generator is in signal communication with the input device via the translator, said codeword generator producing a codeword by applying a decoding function of an error-correcting code to the translated input pattern.

33. The apparatus of claim 29 or 32, the apparatus further comprising a comparator in signal communication with the hasher, said comparator comparing the hash of the codeword to a stored hash and authenticating the input pattern when the hash of the codeword matches the stored hash.

34. The apparatus of claim 25 or 32, the apparatus further comprising a key generator in signal communication with the hasher, said key generator generating a key using an encryption algorithm and the hash of the codeword as the key generation seed.

35. The apparatus of claim 34, the apparatus further comprising an encryption device in signal communication with the key generator, said encryption device encrypting a message using the key.

36. The apparatus of claim 34 or 35, the apparatus further comprising a decryption device in signal communication with the key generator, said decryption device decrypting the/an encrypted message using the key.

37. The apparatus of claim 36, wherein the translator produces the translated input pattern by translating the input pattern by an offset, said offset included as a portion of the encrypted message.

38. The apparatus of claim 34, the apparatus further comprising a signature device in signal communication with the key generator, said signature device signing a message using the key.

39. The apparatus of claim 34, wherein the key generator generates a key pair using an asymmetric encryption algorithm and the hash of the codeword as a key generation seed, said key pair comprising a public key and a private key.

40. The apparatus of claim 39, the apparatus further comprising a transmission device in signal communication with the key generator, the transmission device transmitting the public key to an authentication entity.

## Patentansprüche

1. Verfahren zum Erzeugen einer Fuzzy-Verpackung aus einem Eingangsmuster,
wobei das Verfahren die folgenden Schritte umfasst:
a) Empfangen des Eingangsmusters von einem Benutzer;
b) Wählen eines Codeworts zufällig aus einer Vielzahl von Codeworten, die zu einem Fehlerkorrekturcode gehören; und
c) Abbilden des Eingangsmusters auf das Codewort, um so einen Versatz zwischen dem Eingangsmuster und dem Codewort zu berechnen,
wobei der Versatz die Fuzzy-Verpackung bildet.

2. Verfahren nach Anspruch 1, umfassend einen weiteren Schritt zum Berechnen einer Funktion unter Verwendung des Codeworts als Eingang, um eine Funktion des Codeworts zu erzeugen, wobei der Versatz und die Funktion des Codeworts zusammen die Fuzzy-Verpackung bilden.

3. Verfahren nach Anspruch 1, umfassend einen weiteren Schritt zum Hashen des Codeworts, um einen Hash des Codeworts zu erzeugen, wobei der Versatz und der Hash des Codeworts zusammen die Fuzzy-Verpackung bilden.

4. Verfahren nach irgendeinem der Ansprüche 1 bis 3, wobei das Verfahren ferner den Schritt zum Speichern des Versatzes umfasst.

5. Verfahren nach Anspruch 3, wobei das Verfahren ferner den Schritt zum Speichern des Versatzes und des Hashs des Codeworts umfasst.

6. Verfahren nach Anspruch 5, wobei das Verfahren ferner den Schritt zum Erzeugen eines Schlüssels unter Verwendung eines Verschlüsselungsalgorithmus und des Hashs des Codeworts als einen Schlüsselerzeugungskeim.

7. Verfahren nach Anspruch 3, wobei das Verfahren ferner die folgenden Schritte umfasst:
(a) Erzeugen eines Schlüssels unter Verwendung eines Verschlüsselungsalgorithmus und des Hashs des Codeworts als der Keim;
(b) Verschlüsseln einer Nachricht mit dem Schlüssel; und
(c) Einbauen des Versatzes in Klarschrift mit der verschlüsselten Nachricht.

8. Verfahren zum Erzeugen eines Codeworts auf einem Eingangsmuster, um so das Codewort an einen Benutzer zur Verwendung mit einer Fuzzy-Verpackung zu verpacken, wobei das Verfahren die folgenden Schritte umfasst:
(a) Empfangen des Eingangsmusters von dem Benutzer; und
(b) Ableiten des Codeworts durch Anwenden einer Fehlerkorrektur-Decodierungsfunktion auf das Eingangsmuster.

9. Verfahren nach Anspruch 8, umfassend den weiteren Schritt zum Berechnen einer Funktion unter Verwendung des Codeworts als Eingang, um eine Funktion des Codeworts zu erzeugen.

10. Verfahren nach Anspruch 8, umfassend den weiteren Schritte zum Hashen des Codeworts, um einen Hash des Codeworts zu erzeugen.

11. Verfahren nach irgendeinem vorangehenden Anspruch, wobei der Schritt zum Empfangen eines Eingangsmusters umfasst: Empfangen eines Eingangsmusters, das aus der Gruppe von Metriken gewählt ist, die zu einem Benutzer gehören und bestehen aus:
(i) einer ersten Messung einer Biometrik, und
(ii) einer ersten Messung eines Musters eines Verhaltens,
(iii) eines digitalen Bilds, und
(iv) eines Profils eines variablen ausführbaren Codes.

12. Verfahren nach Anspruch 10, wobei das Verfahren ferner den Schritt zum Speichern des Hashs des Codeworts umfasst.

13. Verfahren nach Anspruch 10, wobei das Verfahren ferner die Schritte zum Vergleichen des Hashs des Codeworts mit einem gespeicherten Hash und ein Authentifizieren des Eingangsmusters, wenn das Hash des Codeworts dem gespeicherten Hash gleicht.

14. Verfahren nach irgendeinem der Ansprüche 8 bis 10, wobei das Verfahren ferner, vor dem Schritt (b), den Schritt zum Verschieben des Eingangsmusters um einen Versatz umfasst; und wobei der Schritt (b) ein Ableiten des Codeworts durch Anwendung einer Fehlerkorrektur-Decodierungsfunktion auf das verschobene Eingangsmuster umfasst.

15. Verfahren nach Anspruch 14, wobei das Verfahren ferner die Schritte zum Vergleichen des Hashs des Codeworts mit einem gespeicherten Hash und ein Authentifizieren des Eingangsmusters, wenn das Hash des Codeworts dem gespeicherten Hash gleicht, umfasst.

16. Verfahren nach Anspruch 14, wobei das Verfahren ferner den Schritt zum Verwenden eines Schlüssels unter Verwendung eines Verschlüsselungsalgorithmus und des Hashs des Codeworts als einen Schlüsselerzeugungskeim umfasst.

17. Verfahren nach Anspruch 6 oder 16, wobei das Verfahren ferner den Schritt zum Verschlüsselung einer Nachricht unter Verwendung des Schlüssels umfasst.

18. Verfahren nach Anspruch 6, 16 oder 17, wobei das Verfahren ferner den Schritt zum Entschlüsseln der/einer verschlüsselten Nachricht unter Verwendung des Schlüssels umfasst.

19. Verfahren nach Anspruch 18, wobei die verschlüsselte Nachricht den Versatz in Klartext einschließt.

20. Verfahren nach Anspruch 6 oder 16, wobei das Verfahren ferner den Schritt zum Versehen einer Nachricht mit einer Signatur unter Verwendung des Schlüssels umfasst.

21. Verfahren nach Anspruch 6 oder 16, wobei der Schritt zum Erzeugen eines Schlüssels unter Verwendung eines Verschlüsselungsalgorithmus und des Hashs des Codeworts als einen Schlüsselerzeugungskeim ein Erzeugen eines Schlüsselpaars unter Verwendung eines asymmetrischen Verschlüsselungsalgorithmus und des Hashs des Codeworts als einen Schlüsselerzeugungskeim umfasst, wobei das Schlüsselpaar einen öffentlichen und einen privaten Schlüssel umfasst.

22. Verfahren nach Anspruch 14 oder 21, wobei das Verfahren ferner den Schritt zum Übertragen des öffentlichen Schlüssels von dem Schlüsselpaar an eine Authentifizierungseinheit umfasst.

23. Vorrichtung zum Erzeugen einer Fuzzy-Verpackung aus einem Eingangsmuster, wobei die Fuzzy-Verpackung einen Versatz zwischen dem Eingangsmuster und einem Codewort umfasst, wobei die Vorrichtung umfasst:
eine Eingabeeinrichtung zum Empfangen des Eingangsmusters von einem Benutzer;
einen Wähler zum Wählen des Codeworts zufällig aus einer Vielzahl von Codeworten, die zu einem Fehlerkorrekturcode gehören; und
einen Abbilder in einer Signalkommunikation mit der Eingabeeinrichtung und dem Wähler, wobei der Abbilder das Eingangsmuster auf das Codewort abbildet, um so den Versatz zwischen dem Eingangsmuster und dem Codewort, auf das der Abbilder das Eingangsmuster abbildet, zu berechnen.

24. Vorrichtung nach Anspruch 23, ferner umfassend einen Hasher in einer Signalkommunikation mit dem Abbilder, wobei der Hasher das Hash des Codeworts durch Anwenden einer Hash-Funktion auf das Codewort erzeugt.

25. Vorrichtung nach Anspruch 23 oder Anspruch 24, wobei die Vorrichtung ferner eine Speichereinrichtung in einer Signalkommunikation mit dem Abbilder umfasst, wobei die Speichereinrichtung den Versatz speichert.

26. Vorrichtung nach Anspruch 23, wobei die Vorrichtung ferner eine Speichereinrichtung in einer Signalkommunikation mit dem Abbilder und dem Hasher umfasst, wobei die Speichereinrichtung den Versatz und den Hash des Codeworts speichert.

27. Vorrichtung nach Anspruch 23, wobei die Vorrichtung ferner umfasst:
einen Schlüsselgenerator in einer Signalkommunikation mit dem Hasher, wobei der Schlüsselgenerator einen Schlüssel unter Verwendung eines Verschlüsselungsalgorithmus und dem Hash des Codeworts als einen Schlüsselerzeugungskeim erzeugt;
eine Verschlüsselungseinrichtung in einer Signalkommunikation mit dem Schlüsselgenerator, wobei die Verschlüsselungseinrichtung eine Nachricht unter Verwendung des Schlüssels verschlüsselt; und
einen Verknüpfer in einer Signalkommunikation mit der Verschlüsselungseinrichtung und dem Abbilder, wobei der Verknüpfer die verschlüsselte Nachricht und den Versatz verbindet.

28. Vorrichtung zum Erzeugen eines Codeworts aus einem Eingangsmuster, um so das Codewort an einen Benutzer zur Verwendung mit einer Fuzzy-Verpackung zu verpacken, wobei die Vorrichtung umfasst:
eine Eingabeeinrichtung, wobei die Eingabeeinrichtung ein Eingangsmuster von dem Benutzer empfängt; und
einen Codewortgenerator in einer Signalkommunikation mit der Eingabeeinrichtung, wobei der Codewortgenerator ein Codewort durch Anwenden einer Decodierungsfunktion eines Fehlerkorrekturcodes auf das Eingangsmuster erzeugt.

29. Vorrichtung nach Anspruch 28, wobei die Vorrichtung ferner einen Hasher in einer Signalkommunikation mit dem Codewortgenerator umfasst, wobei der Hasher ein Hash des Codeworts durch Anwenden einer Hash-Funktion auf das Codewort erzeugt.

30. Vorrichtung nach irgendeinem der Ansprüche 23 oder 29, wobei die Eingabeeinrichtung einen Leser umfasst, der ein Eingangsmuster misst, welches aus der Gruppe von zu dem Benutzer gehörigen Metriken gewählt ist, die bestehen aus:
(i) einer ersten Messung einer Biometrik, und
(ii) einer ersten Messung eines Musters eines Verhaltens,
(iii) eines digitalen Bilds, und
(iv) einem Profil eines variablen ausführbaren Codes.

31. Vorrichtung nach Anspruch 29, wobei die Vorrichtung ferner eine Speichereinrichtung in einer Signalkommunikation mit dem Hasher umfasst, wobei die Speichereinrichtung den Hash des Codeworts speichert.

32. Vorrichtung nach Anspruch 29, wobei die Vorrichtung ferner einen Verschieber in einer Signalkommunikation mit der Eingabeeinrichtung umfasst, wobei der Verschieber ein verschobenes Eingangsmuster durch Verschieben des Eingangsmusters um einen Versatz erzeugt, und wobei der Codewortgenerator in einer Signalkommunikation mit der Eingabeeinrichtung über den Verschieber ist, wobei der Codewortgenerator ein Codewort durch Anwenden einer Decodierungsfunktion eines Fehlerkorrekturcodes auf das verschobene Eingangsmuster erzeugt.

33. Vorrichtung nach Anspruch 29 oder 32, wobei die Vorrichtung ferner einen Vergleicher in einer Signalkommunikation mit dem Hasher umfasst, wobei der Vergleicher den Hash des Codeworts mit einem gespeicherten Hash vergleicht und das Eingangsmuster authentifiziert, wenn das Hash des Codeworts mit dem gespeicherten Hash übereinstimmt.

34. Vorrichtung nach Anspruch 25 oder 32, wobei die Vorrichtung ferner einen Schlüsselgenerator in einer Signalkommunikation mit dem Hasher umfasst, wobei der Schlüsselgenerator einen Schlüssel unter Verwendung eines Verschlüsselungsalgorithmus und des Hash des Codeworts als einen Schlüsselerzeugungskeim erzeugt.

35. Vorrichtung nach Anspruch 34, wobei die Vorrichtung ferner eine Verschlüsselungseinrichtung in einer Signalkommunikation mit dem Schlüsselgenerator umfasst, wobei die Verschlüsselungseinrichtung eine Nachricht unter Verwendung des Schlüssels verschlüsselt.

36. Vorrichtung nach Anspruch 34 oder 35, wobei die Vorrichtung ferner eine Entschlüsselungseinrichtung in einer Signalkommunikation mit dem Schlüsselgenerator umfasst, wobei die Entschlüsselungseinrichtung die/eine verschlüsselte Nachricht unter Verwendung des Schlüssels entschlüsselt.

37. Vorrichtung nach Anspruch 36, wobei der Verschieber das verschobene Eingangsmuster durch Verschieben des Eingangsmusters um einen Versatz erzeugt, wobei der Versatz als ein Abschnitt der verschlüsselten Nachricht enthalten ist.

38. Vorrichtung nach Anspruch 34, wobei die Vorrichtung ferner eine Signatureinrichtung in einer Signalkommunikation mit dem Schlüsselgenerator umfasst, wobei die Signatureinrichtung eine Nachricht unter Verwendung des Schlüssels mit einer Signatur versieht.

39. Vorrichtung nach Anspruch 34, wobei der Schlüsselgenerator ein Schlüsselpaar unter Verwendung eines asymmetrischen Verschlüsselungsalgorithmus und des Hash des Codeworts als einen Schlüsselerzeugungskeim erzeugt, wobei das Schlüsselpaar einen öffentlichen Schlüssel und einen privaten Schlüssel umfasst.

40. Vorrichtung nach Anspruch 39, wobei die Vorrichtung ferner eine Übertragungseinrichtung in einer Signalkommunikation mit dem Schlüsselgenerator umfasst, wobei die Übertragungseinrichtung den öffentlichen Schlüssel an eine Authentifizierungseinheit überträgt.

## Revendications

1. Un procédé pour générer un engagement flou à partir d'une configuration d'entrée, le procédé comprenant les étapes suivantes:
(a) on reçoit la configuration d'entrée à partir d'un utilisateur;
(b) on sélectionne de façon aléatoire un mot de code parmi une multiplicité de mots de code associés à un code correcteur d'erreurs; et
(c) on effectue une application de la configuration d'entrée vers le mot de code de façon à calculer un décalage entre la configuration d'entrée et le mot de code,
le décalage constituant l'engagement flou.

2. Le procédé selon la revendication 1, comprenant une étape supplémentaire consistant à calculer une fonction en utilisant le mot de code en tant qu'information d'entrée, pour produire une fonction du mot de code, dans lequel le décalage et la fonction du mot de code constituent ensemble l'engagement flou.

3. Le procédé selon la revendication 1, comprenant une étape supplémentaire consistant à effectuer un hachage du mot de code pour produire une valeur de hachage du mot de code, dans lequel le décalage et la valeur de hachage du mot de code constituent ensemble l'engagement flou.

4. Le procédé selon l'une quelconque des revendications 1 à 3, le procédé comprenant en outre l'étape de stockage du décalage.

5. Le procédé selon la revendication 3, le procédé comprenant en outre l'étape de stockage du décalage et de la valeur de hachage du mot de code.

6. Le procédé de la revendication 5, le procédé comprenant en outre l'étape consistant à générer une clé en utilisant un algorithme de chiffrement et la valeur de hachage du mot de code comme une graine de génération de clé.

7. Le procédé selon la revendication 3, le procédé comprenant en outre les étapes suivantes:
(a) on génère une clé en utilisant un algorithme de chiffrement et la valeur de hachage du mot de code comme la graine;
(b) on chiffre un message avec la clé; et
(c) on inclut le décalage en clair avec le message chiffré.

8. Un procédé pour générer un mot de code à partir d'une configuration d'entrée, de façon à engager le mot de code vis-à-vis d'un utilisateur pour l'utilisation avec un engagement flou; le procédé comprenant les étapes suivantes:
(a) on reçoit la configuration d'entrée à partir de l'utilisateur; et
(b) on élabore le mot de code en appliquant une fonction de décodage de correction d'erreurs à la configuration d'entrée.

9. Le procédé de la revendication 8, comprenant l'étape supplémentaire consistant à calculer une fonction en utilisant le mot de code en tant qu'information d'entrée, pour produire une fonction du mot de code.

10. Le procédé selon la revendication 8, comprenant l'étape supplémentaire consistant à effectuer un hachage du mot de code pour produire une valeur dé hachage du mot de code.

11. Le procédé selon l'une quelconque des revendications précédentes, dans lequel l'étape de réception d'une configuration d'entrée comprend la réception d'une configuration d'entrée sélectionnée dans le groupe de métriques associées à un utilisateur, comprenant:
(i) une première mesure d'une grandeur biométrique, et
(ii) une première mesure d'une configuration de comportement,
(iii) une image numérique, et
(iv) un profil d'un code exécutable avec possibilité de mutation.

12. Le procédé de la revendication 10, le procédé comprenant en outre l'étape de stockage de la valeur de hachage du mot de code.

13. Le procédé de la revendication 10, le procédé comprenant en outre les étapes consistant à
comparer la valeur de hachage du mot de code avec une valeur de hachage stockée, et
authentifier la configuration d'entrée lorsque la valeur de hachage du mot de code est égale à la valeur de hachage stockée.

14. Le procédé selon l'une quelconque des revendications 8 à 10, le procédé comprenant en outre, avant l'étape (b), l'étape consistant à translater la configuration d'entrée d'une valeur de décalage; et dans lequel l'étape (b) comprend l'élaboration du mot de code par l'application d'une fonction de décodage de correction d'erreurs à la configuration d'entrée translatée.

15. Le procédé de la revendication 14, le procédé comprenant en outre les étapes consistant à
comparer la valeur de hachage du mot de code avec une valeur de hachage stockée, et
authentifier la configuration d'entrée lorsque la valeur de hachage du mot de code est égale à la valeur de hachage stockée.

16. Le procédé de la revendication 14, le procédé comprenant en outre l'étape consistant à générer une clé en utilisant un algorithme de chiffrement et la valeur de hachage du mot de code comme une graine de génération de clé.

17. Le procédé selon la revendication 6 ou 16, le procédé comprenant en outre l'étape de chiffrement d'un message en utilisant la clé.

18. Le procédé selon la revendication 6, 16 ou 17, le procédé comprenant en outre l'étape de déchiffrement du ou d'un message chiffré en utilisant la clé.

19. Le procédé selon la revendication 18, dans lequel le message chiffré contient le décalage en clair.

20. Le procédé selon la revendication 6 ou 16, le procédé comprenant en outre l'étape consistant à signer un message en utilisant la clé.

21. Le procédé selon la revendication 6 ou 16, dans lequel l'étape de génération d'une clé en utilisant un algorithme de chiffrement et la valeur de hachage du mot de code comme une graine de génération de clé, comprend la génération d'une paire de clés en utilisant un algorithme de chiffrement asymétrique et la valeur de hachage du mot de code comme une graine de génération de clé, la paire de clés comprenant une clé publique et une clé privée.

22. Le procédé selon la revendication 14 ou 21, le procédé comprenant en outre l'étape consistant à émettre vers une entité d'authentification la clé publique faisant partie de la paire de clés.

23. Un appareil pour générer un engagement flou à partir d'une configuration d'entrée, l'engagement flou comprenant un décalage entre la configuration d'entrée et un mot de code, l'appareil comprenant:
un dispositif d'entrée pour recevoir la configuration d'entrée provenant d'un utilisateur;
un sélecteur pour sélectionner le mot de code de façon aléatoire parmi une multiplicité de mots de code associés à un code correcteur d'erreurs; et
un dispositif d'application, en communication de signal avec le dispositif d'entrée et le sélecteur, ce dispositif d'application effectuant une application de la configuration d'entrée vers le mot de code de façon à calculer le décalage entre la configuration d'entrée et le mot de code vers lequel le dispositif d'application applique la configuration d'entrée.

24. L'appareil selon la revendication 23, comprenant en outre un dispositif de hachage en communication de signal avec le dispositif d'application, ce dispositif de hachage produisant la valeur de hachage du mot de code en appliquant une fonction de hachage au mot de code.

25. L'appareil selon la revendication 23 ou 24, l'appareil comprenant en outre un dispositif de stockage en communication de signal avec le dispositif d'application, ce dispositif de stockage stockant le décalage.

26. L'appareil selon la revendication 23, l'appareil comprenant en outre un dispositif de stockage en communication de signal avec le dispositif d'application et le dispositif de hachage, ce dispositif de stockage stockant le décalage et la valeur de hachage du mot de code.

27. L'appareil selon la revendication 23, l'appareil comprenant en outre
un générateur de clé en communication de signal avec le dispositif de hachage, ce générateur de clé générant une clé en utilisant un algorithme de chiffrement et la valeur de hachage du mot de code comme une graine de génération de clé;
un dispositif de chiffrement en communication de signal avec le générateur de clé, ce dispositif de chiffrement chiffrant un message en utilisant la clé; et
un dispositif de concaténation en communication de signal avec le dispositif de chiffrement et le dispositif d'application, ce dispositif de concaténation joignant le message chiffré et le décalage.

28. Un appareil pour générer un mot de code à partir d'une configuration d'entrée de façon à engager le mot de code vis-à-vis d'un utilisateur, pour l'utilisation avec un engagement flou, l'appareil comprenant:
un dispositif d'entrée, ce dispositif d'entrée recevant une configuration d'entrée provenant de l'utilisateur; et
un générateur de mot de code en communication de signal avec le dispositif d'entrée, ce générateur de mot de code produisant un mot de code en appliquant à la configuration d'entrée une fonction de décodage d'un code correcteur d'erreurs.

29. L'appareil selon la revendication 28, l'appareil comprenant en outre un dispositif de hachage en communication de signal avec le générateur de mot de code, ce dispositif de hachage produisant une valeur de hachage du mot de code en appliquant une fonction de hachage au mot de code.

30. L'appareil selon l'une quelconque des revendications 23 ou 29, dans lequel le dispositif d'entrée comprend un lecteur qui mesure une configuration d'entrée sélectionnée dans le groupe de métriques associées à l'utilisateur, comprenant:
(i) une première mesure d'une grandeur biométrique, et
(ii) une première mesure d'une configuration de comportement,
(iii) une image numérique, et
(iv) un profil d'un code exécutable avec possibilité de mutation.

31. L'appareil selon la revendication 29, l'appareil comprenant en outre un dispositif de stockage en communication de signal avec le dispositif de hachage, ce dispositif de stockage stockant la valeur de hachage du mot de code.

32. L'appareil selon la revendication 29, l'appareil comprenant en outre un dispositif de translation en communication de signal avec le dispositif d'entrée, ce dispositif de translation produisant une configuration d'entrée translatée en translatant la configuration d'entrée de la valeur d'un décalage, et dans lequel le générateur de mot de code est en communication de signal avec le dispositif d'entrée par l'intermédiaire du dispositif de translation, ce générateur de mot de code produisant un mot de code en appliquant une fonction de décodage d'un code correcteur d'erreurs à la configuration d'entrée translatée.

33. L'appareil selon la revendication 29 ou 32, l'appareil comprenant en outre un comparateur en communication de signal avec le dispositif de hachage, ce comparateur comparant la valeur de hachage du mot de code avec une valeur de hachage stockée, et authentifiant la configuration d'entrée lorsque la valeur de hachage du mot de code concorde avec la valeur de hachage stockée.

34. L'appareil selon la revendication 25 ou 32, l'appareil comprenant en outre un générateur de clé en communication de signal avec le dispositif de hachage, ce générateur de clé générant une clé en utilisant un algorithme de chiffrement et la valeur de hachage du mot de code comme la graine de génération de clé.

35. L'appareil selon la revendication 34, l'appareil comprenant en outre un dispositif de chiffrement en communication de signal avec le générateur de clé, ce dispositif de chiffrement chiffrant un message en utilisant la clé.

36. L'appareil selon la revendication 34 ou 35, l'appareil comprenant en outre un dispositif de déchiffrement en communication de signal avec le générateur de clé, ce dispositif de déchiffrement déchiffrant le ou un message chiffré en utilisant la clé.

37. L'appareil selon la revendication 36, dans lequel le dispositif de translation produit la configuration d'entrée translatée en translatant la configuration d'entrée de la valeur d'un décalage, ce décalage étant inclus comme une partie du message chiffré.

38. L'appareil selon la revendication 34, l'appareil comprenant en outre un dispositif de signature en communication de signal avec le générateur de clé, ce dispositif de signature signant un message en utilisant la clé.

39. L'appareil selon la revendication 34, dans lequel le générateur de clé génère une paire de clés en utilisant un algorithme de chiffrement asymétrique, et la valeur de hachage du mot de code comme une graine de génération de clé, cette paire de clés comprenant une clé publique et une clé privée.

40. L'appareil selon la revendication 39, l'appareil comprenant en outre un dispositif d'émission en communication de signal avec le générateur de clé, le dispositif d'émission émettant la clé publique vers une entité d'authentification.
